(19) Europäisches Patentamt
European Patent Office
Office européen des brevets

(11) Publication number: **0 146 579 B1**

(12) **EUROPEAN PATENT SPECIFICATION published in accordance with Art. 158(3) EPC**

(45) Date of publication of patent specification: **07.08.91**

(51) Int. Cl.$^5$: **C08L 21/00**, C08K 5/17, C08K 5/20, C08K 5/34

(21) Application number: **84902036.7**

(22) Date of filing: **16.05.84**

(86) International application number: **PCT/GB84/00168**

(87) International publication number: **WO 84/04530 (22.11.84 84/27)**

The file contains technical information submitted after the application was filed and not included in this specification

(54) **A PROCESS FOR TREATING RUBBER.**

(30) Priority: **16.05.83 GB 8313398**

(43) Date of publication of application: **03.07.85 Bulletin 85/27**

(45) Publication of the grant of the patent: **07.08.91 Bulletin 91/32**

(84) Designated Contracting States: **AT BE DE FR GB LU NL SE**

(56) References cited:
**EP-A- 5 617**
**EP-A- 76 197**
**GB-A- 965 203**
**US-A- 3 369 004**
**US-A- 3 502 612**

**CHEMICAL ABSTRACTS, vol. 73, no. 26, 28 Dec 1970, Columbus, OH (US); V.I.LUZAN et al.: "Vulcanization of natural rubber in the presence of ethylenediamine and its derivatives", p. 34, no. 131774k**

(73) Proprietor: **Loughborough Consultants Limited**
**New Ashby Road**
**Loughborough Leicestershire LE11 3TU(GB)**

(72) Inventor: **HEPBURN, Claude**
**8 Grove Road Loughborough**
**Leicestershire LE11 3QN(GB)**

(74) Representative: **Baillie, Iain Cameron et al**
**c/o Ladas & Parry Isartorplatz 5**
**W-8000 München 2(DE)**

EP 0 146 579 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a process for treating rubber utilising certain classes of cationic surfactants in the form of surface active plasticiser accelerators (hereinafter referred to as SAPA).

To enable rubbers to be processed it is customary to intimately mix into them liquids and low melting solids which function as internal lubricants or plasticisers during processing causing a reduction in viscosity, easing filler incorporation and reducing the frictional heat generated during the high shear rate processing operations of internal mixing, extruding etc. These plasicisers are considered to function in a physical rather than chemical manner and their function is not usually dependent on the temperature of mixing or curing. Usually their relative compatibility with a particular rubber is considered important and the solubility parameter concept is frequently used to predict compatibility, on the basis of a rubber and plasticiser possessing approximately similar solubility parameters being more likely to be compatible than the reverse situation. Compatibility of a plasticiser with rubber must be considered a concept or combination of properties, rather than a specific individual property and is assessed as follows.

Processing of Unvulcanised Rubber

1. The plasticiser's effect is measured by the rate at which it can be assimilated into the rubber during mixing and by the subsequent temperature generated and heat history of the mix.
2. The quantity of plasticiser able to be assimilated by the rubber without subsequent blooming and exudation of surface liquid is important together with the effect of plasticiser proportions on viscosity of the rubber mix.
3. Influence of a plasticiser on cure rate and state is also important and, as a generalisation, cure retardation is regarded as undesirable leading to loss of properties and greater costs.
4. The effect on dielectric properties of a rubber by a plasticiser can also be important.

Properties of Vulcanised Rubber

As a generalisation, at present, with the exception of polymerisable and crosslinkable plasticisers, such as acrylics and phenolics, the presence of a plasticiser in a rubber reduces the strength of its vulcanisate to a greater or lesser degree. Hence the relative effect of different plasticisers on strength reduction in a rubber mix is commonly used to assess its compatibility or efficiency. Sometimes, due to the lack of sensitivity of the rubber test techniques, changes in strength properties due to the presence of a plasticiser cannot be measured. Other properties often used to assess plasticiser compatibility and effectiveness are:- staining, colour stability, ageing resistance, volatility from the rubber during processing, curing and service; fluid extractability and retention of flexibility at low temperatures. This investigation concerns the effect of a cationic surfactant as a rubber compounding ingredient.

Cationic surfactants comprising the fatty acid salts of primary amines have been mixed with rubber in an attempt to improve flow characteristics, and the release and strength properties of rubber. However, the use of these primary amines has proved unsatisfactory for a number of reasons including scorching where the scorch properties of the rubber are very poor.

Chemical Abstracts Vol. 73, 1970 No. 131774k discloses that the vulcanisation of natural rubber may be enhanced by incorporating ethylenediamine or derivatives thereof such as $C_{17}H_{35}.CO.NH(CH_2)_2.NH_2.HOOC.\ C_{17}\ H_{35}$.

EPO 0,005,617 A discloses rubber compounds incorporating an amine salt of a carboxylic acid which crosslinks with a glycidyl monomer to produce a hard rubber.

US 3,502,612 discloses the use of amines, including imidazoline, for preserving phenylene diamine antiozonant in rubber.

US 3,369,004 discloses a process for vulcanising rubber wherein an activator comprising a 1,2-substituted imidazoline is used to activate a primary cure accelerator.

EP-A-76,197 discloses an additive for elastomers containing silica-based mineral fillers. The additive molecule has at one end a moiety which has an affinity for the silica mineral filler and at another end a moiety which has an affinity for the elastomer chains. One class of additives disclosed in this publication are the condensation products of polyethylene amines such as ethylene diamine, diethylene triamine and tetraethylene pentamine with long-chain carboxylic acids such as oleic acid and linoleic acid. These condensation products are stated to be analysed as mixtures of alkyl amides and imidazolines. A number of rubber formulations are disclosed which incorporate such additives and which possess improved dynamic properties, as well as accelerated vulcanisation and greater tensile strength. However, all the formulations

disclosed incorporate conventional amounts of zinc oxide/stearic acid cure activator and also conventional amounts of a conventional organic cure accelerator. In all the Examples except Example 4, the amount of condensation product additive is less than the amount of organic cure accelerator and in all the Examples including Example 4, the additive differs significantly from the additives employed in the present invention.

The present invention provides a process for treating rubber comprising mixing the rubber with a cationic surfactant and curing the mixture, said cationic surfactant comprising an imidazoline having only two nitrogen atoms in the molecule or a carboxylate salt of an N-alkyl alkylene diamine, said mixture optionally containing a conventional organic cure accelerator and optionally containing a conventional cure activator system, wherein the amount of said cationic surfactant is greater than or equal to the amount (if any) of said conventional organic cure accelerator.

Thus, the invention stems from a recognition that by using the above additives, the amounts of conventional cure activator and accelerator may be reduced or may even be dispensed with.

Said cationic surfactant may for example be 1(2-hydroxyethyl)-2-heptadecenyl imidazoline or 1-hydroxyethyl-2-oleyl imidazoline.

In the case in which the cationic surfactant is a carboxylate salt, it is preferably of the general formula:

$$[R(NH_2)(CH_2)_3NH_3]^{2+}.2R_1COO^-$$

wherein R and $R_1$ are long chain alkyl groups. Preferably $R_1COO^-$ is stearate, laurate, palmitate, oleate, the anion of soya acid or the anion of hydrogenated tallow acid.

Preferably the cation of said formula is N-COCO-1,3,diaminopropane; N-tallow-1,3 diamino propane; or N-oleyl-1,3-diamino propane.

The carboxylate salt of said formula is preferably N-tallow-1,3-diamino-propane dioleate; N-stearic-1,3-diamino-propane distearate; or N-oleyl-1,3-diamino-propane dioleate.

The process of the invention may be used in the manufacture of moulded rubber articles such as tyres for example.

In the process of treating rubber the mixture of rubber and cationic surfactant may be vulcanised by heating in the presence of sulphur or a sulphur donating compound.

Embodiments of the present invention will now be described by way of example with reference to the accompanying drawings, in which:-

Figure 1 is a graph illustrating the curing properties achieved by the use of SAPA in natural rubber (NR).

Figure 2 is a graph illustrating the curing properties achieved by the use of SAPA in styrene butadiene rubber (SBR),

Figure 3 is a graph illustrating the curing properties of polychloroprene rubber (CR) with SAPA,

Figure 4 is a graph illustrating the curing properties of Nitrile rubber with SAPA,

Figure 5 is a graph illustrating the comparative cure properties of SAPA with various rubber processing oils and processing additives,

Figure 6 is a graph illustrating the shear stress/shear rate properties of tread rubber with processing oils and SAPA,

Figure 7 (a) and 7 (b) illustrate the use of SAPA as a processing aid in both black and silica filled mixes,

Figure 8 (a) and 8 (b) illustrate SEM micrographs which demonstrate the ability of the SAPA surfactant as a filler dispersion and wetting agent in natural rubber, and

Figure 9 (a) and 9 (b) illustrate SEM micrographs which demonstrate the ability of the SAPA surfactant as a wetting agent in SBR.

A number of experiments illustrating the improved properties of a rubber achieved using SAPA are described below. The rubber prepared in each case is generally banded on a rubber mixing two roll mill in the conventional temperature range 30° to 100°C, but more usually at approximately 50°C. The SAPA and other small chemical compounds together with 1/3 of the filler content are then added to the rubber and dispersed. The remaining filler and any other processing oil, if any, are then added and also dispersed. The step is followed by the addition and dispersion of sulphur.

Finally the mix is refined at least six times. During the treatment of the rubber SAPA dissociates at higher temperatures used for vulcanisation, that is greater than 140°C, to form, for example, a secondary amine, which functions as an organic accelerator of cure.

Test methods are conventional, as far as possible, and based on BS, ASTM or ISO rubber test method procedures. The mixing procedure used are as follows:-

1. Mill rolls set to approximately 50±5°C and friction ration of 1.1:1.
2. NR banded around rolls and masticated to form a smooth coherent band.
3. Zinc oxide, stearic acid, CBS, Permanax BL were added with half the carbon black and incorporated

into the rubber.

4. Remainder of carbon black was added together with the high strength plasticiser and dispersed.
5. Sulphur was added.
6. Mix was refined six times through a tight nip and sheeted off at 3 mm thickness for preparation of test specimens.

Chemical Composition of the Cationic Surfactant (SAPA) Series

The composition of the cationic surfactant (SAPA) used in this investigation is:-

$(R(NH_2)(CH_2)_3(CH_2)_3NH_3)^{2+}2(R'.COO^-)$

where R = tallow and R' = oleate.

This compound has the ability to partially dissociate on heating into some of its primary components and it is this property which is considered to account for its simultaneous multiplicity of uses as a rubber processing aid, cure rate activator and accelerator, and as a surface active plasticiser that enhances filler reinforcement of rubber by means of the mechanism disclosed above.

Series 1 Experiments

During an investigation of the properties of various processing aids and plasticisers in particulate filler and fibre reinforced rubbers, it was observed that one class of liquids behaved unconventionally by, in certain instances, increasing both the Mooney viscosity and strength properties of unfilled (gum) and filled natural rubber. The particular experiment and series of compounds which this observation was made is detailed in Table 1 below, see Formulation 9.

Table 1 (a) Formulation used and properties of Gum (Unfilled) Vulcanisates Containing Different Types of Bonding Agents

| Formulation | MIX NO. | | | | | | | | |
|---|---|---|---|---|---|---|---|---|---|
| pphr | 1 | 2 | 3 | 4 | 5 | 6 | 7 | 8 | 9 |
| NR (SMR 5) | 100 | 100 | 100 | 100 | 100 | 100 | 100 | 100 | 100 |
| Zinc oxide | 5 | 5 | 5 | 5 | 5 | 5 | 5 | 5 | 5 |
| Stearic acid | 2 | 2 | 2 | 2 | 2 | 2 | 2 | 2 | 2 |
| Sulphur | 2.5 | 2.5 | 2.5 | 2.5 | 2.5 | 2.5 | 2.5 | 2.5 | 2.5 |
| CBS | 0.5 | 0.5 | 0.5 | 0.5 | 0.5 | 0.5 | 0.5 | 0.5 | 0.5 |
| Pemerax BL | 1.5 | 1.5 | 1.5 | 1.5 | 1.5 | 1.5 | 1.5 | 1.5 | 1.5 |
| Cohedur RS | - | 3.5 | 3.5 | 3.5 | - | - | - | - | - |
| HMT | - | 1.8 | 1.8 | - | - | - | - | - | - |
| Vulkasil S | - | - | 15 | - | - | - | - | - | - |
| Cohedur A | - | - | - | 2.5 | - | - | - | - | - |
| Cohedur RL | - | - | - | - | 5.5 | - | - | - | - |
| Resimene 3520 | - | - | - | - | - | 2 | - | - | - |
| Si69 | - | - | - | - | - | - | 2 | - | - |
| Silane Z6062 | - | - | - | - | - | - | - | 2 | - |
| *SAPA | - | - | - | - | - | - | - | - | 2 |
| **Properties** | **1** | **2** | **3** | **4** | **5** | **6** | **7** | **8** | **9** |
| Scorch time $t_{S2}$ at 150°C(mins) | 7.0 | 3.5 | 7.0 | 7.0 | 8.5 | 7.0 | 7.5 | 3.5 | 3.5 |
| Cure time ($T_{95}$) at 150°C(mins) | 15.0 | 17.0 | 21.0 | 26.5 | 28.0 | 20.0 | 19.0 | 21.0 | 12.5 |
| Maximum torque (dN-m) | 22.5 | 26.5 | 33.5 | 23.0 | 23.5 | 26.0 | 24.0 | 13.0 | 14.5 |
| Cure rate (dN.m/min) (slope of steep region) | 4.5 | 4.25 | 4.0 | 1.7 | 3.0 | 3.0 | 3.5 | 1.0 | 4.25 |

*SAPA is the surface active plasticiser

Table 1 (a) continued overleaf

Table 1 (a) Continued.

| Properties cont... | 1 | 2 | 3 | 4 | 5 | 6 | 7 | 8 | 9 |
|---|---|---|---|---|---|---|---|---|---|
| Tensile strength MPa) | 19.6 | 16.0 | 20.8 | 17.3 | 19.3 | 24.2 | 22.9 | 13.8 | 28.4 |
| Elongation at break (%) | 775 | 575 | 625 | 725 | 725 | 675 | 725 | 675 | 690 |
| Tensile product (MPa x %) x $10^{-2}$ | 152 | 92 | 130 | 125 | 140 | 163 | 166 | 93 | 196 |
| Modulus at 100% (MPa) | 0.82 | 1.02 | 1.38 | 0.82 | 0.86 | 1.08 | 0.81 | 0.83 | 1.1 |
| Tear strength ($KNm^{-1}$) | 49.8 | 37.5 | 41.0 | 56.3 | 42.2 | 54.9 | 45.7 | 47.3 | 54.6 |
| Hardness (IRHD) | 35 | 40 | 46 | 36 | 36 | 40 | 36 | 36 | 41 |
| Compression set @ 100°C for 24 hrs (%) | 45.2 | 39.1 | 36.4 | 36.4 | 42.0 | 52.2 | 38.9 | 34.7 | 41.6 |
| $V_r(\frac{V_1 - V_F}{V_1})$ | 0.7354 | 0.7122 | 0.7018 | 0.7523 | 0.7462 | 0.7277 | 0.7310 | 0.7395 | 0.7115 |
| Aged properties (70°C for 1 week) | | | | | | | | | |
| Tensile strength (MPa) | 12.6 | 13.8 | 13.6 | 13.4 | 15.2 | 15.8 | 1.9 | 2.2 | 16.0 |
| Retention. % | 64.3 | 86.3 | 65.4 | 77.5 | 78.8 | 65.3 | 8.3 | 15.9 | 66.1 |
| Elongation at break (%) | 650 | 450 | 475 | 550 | 635 | 635 | 220 | 315 | 536 |
| Retention. % | 83.8 | 72.2 | 76 | 75.6 | 87.6 | 79.3 | 30 | 47 | 77.5 |
| Hardness (IRHD) | 43 | 44 | 50 | 39 | 38 | 44 | 41 | 40 | 46 |
| Increment | 8 | 4 | 4 | 3 | 2 | 4 | 5 | 4 | 5 |

*SAPA in the surface active plasticiser

Table 1 (b) Formulation Used and Properties of Black Vulcanisates Containing Different types of Bonding Agents

| Formulation | Mix No. | | | | | | | | |
|---|---|---|---|---|---|---|---|---|---|
| pphr | 1 | 2 | 3 | 4 | 5 | 6 | 7 | 8 | 9 |
| NR (SMR 5) | 100 | 100 | 100 | 100 | 100 | 100 | 100 | 100 | 100 |
| Zinc oxide | 5 | 5 | 5 | 5 | 5 | 5 | 5 | 5 | 5 |
| Stearic acid | 2 | 2 | 2 | 2 | 2 | 2 | 2 | 2 | 2 |
| Sulphur | 2.5 | 2.5 | 2.5 | 2.5 | 2.5 | 2.5 | 2.5 | 2.5 | 2.5 |
| CBS | 0.5 | 0.5 | 0.5 | 0.5 | 0.5 | 0.5 | 0.5 | 0.5 | 0.5 |
| Permanax BL | 1.5 | 1.5 | 1.5 | 1.5 | 1.5 | 1.5 | 1.5 | 1.5 | 1.5 |
| Carbon Black (HAF N330) | 30 | 30 | 30 | 30 | 30 | 30 | 30 | 30 | 30 |
| Cohedur RS | - | 3.5 | 3.5 | 3.5 | - | - | - | - | - |
| HMT | - | 1.8 | 1.8 | - | - | - | - | - | - |
| Vulkasil S | - | - | 15 | - | - | - | - | - | - |
| Cohedur A | - | - | - | 2.5 | - | - | - | - | - |
| Cohedur RL | - | - | - | - | 5.5 | - | - | - | - |
| Resimene 3520 | - | - | - | - | - | 2.0 | - | - | - |
| Si69 | - | - | - | - | - | - | 2.0 | - | - |
| Silane Z6062 | - | - | - | - | - | - | - | 2.0 | - |
| SAPA* | - | - | - | - | - | - | - | - | 2.0 |

| Properties | 1 | 2 | 3 | 4 | 5 | 6 | 7 | 8 | 9 |
|---|---|---|---|---|---|---|---|---|---|
| Scorch time $ts_2$ at 150°C(mins) | 4.8 | 2.5 | 3.5 | 4.0 | 6.0 | 4.8 | 5.8 | 2.0 | 3.0 |
| Cure time ($T_{95}$) at 150°C(mins) | 14 | 15 | 22 | 28 | 28 | 21 | 19 | 13 | 13 |
| Maximum torque (dN-m) | 31 | 43 | 49 | 39 | 37 | 37 | 33 | 34 | 37 |

Table 1 (b) Continued

| Properties cont.. | 1 | 2 | 3 | 4 | 5 | 6 | 7 | 8 | 9 |
|---|---|---|---|---|---|---|---|---|---|
| Cure rate (dN.m/min) (slope of steep region) | 5.5 | 8.5 | 5.5 | 2.5 | 3.5 | 4.8 | 4.0 | 5.5 | 6.0 |
| Tensile strength MPa) | 26.1 | 21.4 | 19.8 | 17.3 | 15.8 | 26.8 | 28.8 | 25.6 | 30.4 |
| Elongation at break (%) | 600 | 425 | 425 | 460 | 525 | 590 | 620 | 575 | 600 |
| Tensile product (MPa x %) x $10^{-2}$ | 157 | 91 | 84 | 80 | 83 | 158 | 179 | 147 | 182 |
| Modulus at 100% (MPa) | 2.0 | 4.0 | 3.9 | 3.0 | 2.6 | 2.5 | 2.3 | 2.2 | 2.4 |
| Tear strength ($KNm^{-1}$) | 54.3 | 130.8 | 117.3 | 27.3 | 29.5 | 138 | 126.2 | 115 | 122 |
| Hardness (IRHD) | 54 | 72 | 77 | 72 | 72 | 64 | 60 | 55 | 62 |
| Compression set @ 100°C for 24 hrs (%) | 50 | 39.1 | 47.0 | 50.3 | 55.4 | 51.9 | 49.4 | 64.3 | 45.7 |
| $V_r\left(\frac{V_1 - V_F}{V_1}\right)$ | 0.6661 | 0.6191 | 0.6327 | 0.6795 | 0.6794 | 0.6640 | 0.6696 | 0.6705 | 0.6391 |
| <u>Aged properties</u> (at 70°C for 1 week) | | | | | | | | | |
| Tensile strength (MPa) | 25.9 | 19.1 | 12.9 | 13.5 | 14.3 | 21.7 | 16.9 | 18.9 | 22.0 |
| Retention % | 99 | 79.9 | 65.2 | 77.9 | 90.4 | 80.9 | 58.7 | 64.5 | 72.5 |
| Elongation at break (%) | 550 | 320 | 275 | 325 | 350 | 445 | 425 | 400 | 475 |
| Retention % | 91.7 | 75.3 | 64.9 | 70.7 | 66.7 | 75.4 | 68.5 | 69.6 | 79.2 |
| Hardness (IRHD) | 58 | 77 | 83 | 79 | 77 | 70 | 66 | 60 | 67 |
| Increment | 4 | 5 | 5 | 7 | 5 | 6 | 6 | 5 | 5 |

*SAPA is the surface active plasticiser

<u>Series 2 Experiments</u>

<u>Surface Active Plasticiser Accelerator in Natural Rubber</u>

Following this observation another experiment was carried out in our laboratory to ascertain whether this apparent reinforcing effect would also apply to both unfilled NR (gum) and carbon black reinforced NR. The formulations used and results obtained are given in Table 2 below and Figure 1; the physical properties at two cure states were measured, namely $t_{90}$ and $t_{95\%}$ cure.

Table 2- Reinforcing Effect of Surface Active Plasticiser Accelerator (SAPA no. 1) on Unfilled and Filled NR

| | Controls | | SAPA Plasticiser | |
|---|---|---|---|---|
| | Unfilled | Filled | Unfilled | Filled |
| Natural Rubber (SMR 5) | 100 | 100 | 100 | 100 |
| Zinc oxide | 5 | 5 | 5 | 5 |
| Stearic acid | 2 | 2 | 2 | 2 |
| HAF Black | - | 30 | - | 30 |
| Sulphur | 2.5 | 2.5 | 2.5 | 2.5 |
| CBS | 0.5 | 0.5 | 0.5 | 0.5 |
| Permanax BL | 1.5 | 1.5 | 1.5 | 1.5 |
| Surface Active Plasticiser Accelerator ( 1) | - | - | 2 | 2 |

*(N330. Vulcan 3 of Cabot Carbon)

| properties | Unfilled (gum stock) | | | | Carbon Black filled | | | |
|---|---|---|---|---|---|---|---|---|
| | Control | | SAPApresent | | Control | | SAPApresent | |
| Cure properties<br>ODR at 150°C | 1 arc | 3 arc | 1 arc | 3 arc | 1 arc | 3 arc | 1 arc | 3 arc |
| Max torque (lb in) | 22.5 | 49 | 24.5 | 57 | 31 | 63 | 37 | 75 |
| Min torque (lb in) | 18 | 45 | 21 | 55 | 26.5 | 60 | 34 | 70 |
| t95 (m) | 15 | 17 | 12.5 | 12 | 14 | 14 | 13 | 11 |
| t2 (m) | 7 | 8 | 3.5 | 4 | 3.5 | 5 | 3 | 3 |
| Mooney Viscosity<br>$ML_{1+4}$ 100° C | 16 | | 18 | | 27 | | 28 | |
| Physical Properties<br>Cure Conditions | 15 m at 150°C | | | | | | | |
| Tensile Strength MPa | 17 | | 21.2 | | 25.6 | | 26.2 | |
| Elongation at break % | 760 | | 750 | | 610 | | 530 | |
| 300% modulus MPa | 1.4 | | 1.8 | | 8.2 | | 9.9 | |
| Hardness IRHD | 39 | | 42 | | 52 | | 56 | |
| Cure Conditions | 20 m at 150°C | | | | | | | |
| Tensile Strength MPa | 19.6 | | 28.4 | | 26.1 | | 30.4 | |
| Elongation at Break % | 775 | | 690 | | 600 | | 600 | |
| 300% modulus MPa | - | | - | | - | | - | |
| Hardness IRHD | 39 | | 42 | | 54 | | 62 | |
| Tear Strength kN/m(i) | 99 | | 109 | | 108 | | 144(244)(ii) | |
| Compression set %<br>24 hr. at 70°C | 46 | | 41 | | 50 | | 46 | |

(i) BS903. (ii) An occasional very high value was observed.

Examination of these results show the following features:

the addition of SAPA:

i) Increases the cure state of both unfilled (47%) and filled (61%) NR and reduces the induction time (processing safety) before cure commences (see figure 1).

ii) Increases the strength properties significantly, i.e. UTS increases by 45% and 16% in unfilled and filled vulcanisates respectively and the comparative tear strength increases are 10% and 33%.

iii) Hardness increases significantly by 17% in unfilled and 15% in filled vulcanisates.

iv) Compression set reduces by 12% in unfilled and 8.5% in filled vulcanisates.

v) Most unexpectedly and inexplicably the addition of the liquid SAPA increases Mooney Viscosity by small but significant amounts with the increase being 12.5% in unfilled and 4% in filled mixes.

During the Series 1 and Series 2 experiments the unvulcanised rubbers were observed to possess outstandingly good flow and processing properties and these characteristics were now observed in more detail.

Series 3 Experiments

Examination of SAPA in some Synthetic Rubbers

SAPA was examined in some common synthetic rubbers for its effect on processing and properties and the results are now systematically given and commented upon.

SBR Rubber

This rubber was examined in the filler reinforced condition, as in the unfilled condition it has only very poor strength; both carbon black and precipitated silica reinforced rubbers were investigated. Results are given in Table 3 below and Figure 2.

Table 3 - SBR Rubber. SAPA compared with Aromatic Oil and Triethanolamine.

| | Carbon Black Reinforced | | | Silica Reinforced | |
|---|---|---|---|---|---|
| | No plasticiser | Aromatic Oil | SAPA | Treithanolamine | SAPA |
| Intol 1502 | 100 | 100 | 100 | 100 | 100 |
| ZnO | 5 | 5 | 5 | 5 | 5 |
| Stearic acid | 1 | 1 | 1 | 1 | 1 |
| HAF Black | 30 | 30 | 30 | - | - |
| MBT (mercaptobenz-thiazole) | 1.5 | 1.5 | 1.5 | 1.5 | 1.5 |
| DPG (diphenylguanidine) | 0.5 | 0.5 | 0.5 | 0.5 | 0.5 |
| Sulphur | 2.0 | 2.0 | 2.0 | 2.0 | 2.0 |
| Permanax B | 1.0 | 1.0 | 1.0 | 1.0 | 1.0 |
| Ultrasil VN3 | - | - | - | 40.0 | 40.0 |
| Dutrex 729 | - | 2.0 | - | - | 2.0 |
| SAPA | - | - | 2.0 | - | 2.0 |
| Triethanolamine | - | - | - | 2.0 | - |
| Mooney Viscosity ML1+4 at 100°C | 50 | 47 | 44 | 72 | 64 |
| Cure Conditions | 30 | minutes | | at | 150°C |
| Tensile Strength MPa | 12.1 | 11.6 | 12.2 | 9.3 | 14.0 |
| Tensile strength after 7 days at 70°C | 11 | 9.4 | 10 | 7.6 | 9.0 |
| EB % | 420 | 400 | 410 | 460 | 640 |
| EB % after 7 days at 70°C | 390 | 380 | 380 | 370 | 520 |
| Hardness IRHD | 60 | 60 | 60 | 70 | 71 |
| Hardness after 7 days at 70°C | 60 | 59 | 61 | 71 | 71 |
| Tear strength N / 2mm | 80 | 150 | 73 | 90 | 106 |
| Compression set after 48 hr / 70°C | 13 | 12 | 10 | 10 | 20 |

Continued .........

Table 3 - Continued

| Processing Properties | Carbon Black Reinforced | | | Silica Reinforced | |
|---|---|---|---|---|---|
| | No plasticiser | Aromatic oil | SAPA | Triethanolamine | SAPA |
| Flow | Poor surface finish on compression moulded sheet; stress lines and small depressions present | Intermediate dull finish flow lines visible | Glossy finish with no faults present. Stress free moulding | Poor surface finish; sheet was buckled and distorted due to moulding stresses | Glossy surface finish with no surface defects or stresses in sheet |
| Mould Release properties | Mould release essential | Mould release desirable | No mould release needed | Mould release is a major problem | Mould release excellent |

Processing and Curing Properties

The behaviour of SAPA in SBR is different from its response in NR as can be seen by the following interpretation of the data in Table 3 and Figure 2. In SBR the plasticiser SAPA behaves conventionally as its inclusion lowers the Mooney viscosity, whereas in NR the Mooney viscosity was increased indicating some chemical response was occurring; in carbon black rubbers the reduction in Mooney viscosity, for the addition of only a small amount (2phr) was 12% for SAPA compared with 6% with aromatic oil and in a silica filled rubber the viscosity reduction compared with triethanolamine was also considerable.

Moulding

The SBR mixes containing SAPA possessed markedly superior flow and processing properties to their controls by producing undistorted stress free test specimen sheets when compression moulded from a cold thick round blank (of 10mm thickness) by the simple application of pressure. The equivalent control rubber all gave moulded sheets possessing defects due to flow problems.

Physical properties of particular note, however, are the cure activation effect of SAPA in an all-silica filled rubber where it out-performs the standard activator triethanolamine; it should be noted that both SAPA and triethanolamine (TEA) in a silica filled SBR give the same state of cure, as determined by an oscillating disc rheometer (ODR). The inclusion of SAPA increases the tensile strength (50%), elongation at break (39%) and the tear strength (17%) over the conventional TEA containing silica SBR; compression set is inferior. SAPA gives about the same physical properties in a carbon black filled SBR as does a standard aromatic oil (see Table 3 and Figure 2) but gives substantially better release for metal surfaces.

Series 4 Experiments

Examination of SAPA in some Synthetic Rubbers

For this purpose rubbers were divided into two classes; strain crystallisable (CR) and non-strain crystallisable (NBR). The results are shown in Tables 4 and 5 and Figures 3 and 4 showing a comparison of SAPA effects versus conventional plasticisers as controls.

Table 4 - Polychloroprene. SAPA compared with Dioctylphthalate

| | Unfilled (gum stock) | | Carbon Black filled | |
|---|---|---|---|---|
| | Control | SAPA present | Control | SAPA present |
| Neoprene GRT | 100 | 100 | 100 | 100 |
| ZnO | 5 | 5 | 5 | 5 |
| Magnesia (MgO) | 4 | 4 | 4 | 4 |
| Robac 22 | 0.5 | 0.5 | 0.5 | 0.5 |
| HAF Black | - | - | 50 | 50 |
| Permanax B | 1 | 1 | 1 | 1 |
| SAPA | - | 2 | - | 2 |
| DOP | - | - | 2 | - |
| Mooney Viscosity ML 1+4 at 100 C | 30 | 29 | 15 | 16 |
| Cure conditions | $t_{95\%}$ | by ODR | - | Figure 3 |
| Tensile Strength MPa | 6.4 | 9.9 | 19.7 | 19.8 |
| Tensile Strength MPa After 7 days at 70°C | 5.9 | 4.8 | 18.4 | 18.3 |
| Elongation at break % | 580 | 840 | 350 | 330 |
| Elongation at break % After 7 days at 70°C | 480 | 500 | 345 | 335 |
| Hardness IRHD | 42 | 45 | 80 | 81 |
| Hardness IRHD After 7 days at 70°C | 43 | 47 | 81 | 82 |
| Tear Strength N | 87 | 37.5 | 115 | 112 |
| Compression set 48 hr at 70 C | 20 | 22 | 9 | 12 |
| Processing Properties | Poor flow and mill roll release. Difficult to mill and mould. Stress lines on cured mouldings. | Mill flow and roll release excellent. No stress lines or distortion of cured mouldings. | Mill flow difficult due to high black content. High shear heat generation during mixing. Distorted mouldings if blank preparation not accurate. | Easy processing rubber; low heat generation during mixing. Moulds readily with no flow or stress problems in final moulding. |

Table 5 - Nitrile Rubber. SAPAcompared with Dioctylphthalate in a Carbon Black Reinforced Mix

| | Control Ester plasticiser DOP | SAPA present |
|---|---|---|
| Breon 1042 | 100 | 100 |
| ZnO | 5 | 5 |
| Stearic acid | 1 | 1 |
| CBS (N-cyclobenzthiazole sulphenamide) | 1 | 1 |
| TMT | 0.5 | 0.5 |
| Sulphur | 1.5 | 1.5 |
| Permanax B | 1 | 1 |
| HAF Black | 30 | 30 |
| DOP | 2 | - |
| SAPA | - | 2 |
| Mooney viscosity ML 1+4 at 100°C | 53 | 52 |
| Tensile Strength MPa | 13.9 | 15.7 |
| Tensile Strength MPa after 7 days at 70°C | 13.5 | 11.4 |
| Elongation at break % | 390 | 400 |
| Elongation at break after 7 days at 70°C | 380 | 370 |
| Hardness IRHD | 69 | 65 |
| Hardness after 7 days at 70°C | 67 | 66 |
| Tear strength N | 92 | 68 |
| Compression set 48h/70°C | 21 | 6.5 |
| Processing Properties | Distorted and stressed moulded sheet with poor surface finish. | Undistorted moulding with high gloss defect free surface. |

Cure Conditions 15'/150°C

Polychloroprene and SAPA

The effect of SAPA on the Mooney viscosity of CR is similar to a conventional plasticiser in both unfilled and filled rubbers. Cure rate is not significantly affected by SAPA but the cure state ($t_{95}$ Modulus) of the unfilled CR is considerably enhanced; the cure state of the filled CR is only maginally enhanced, possibly because insufficient SAPA has been added to the CR mix which contains 50 phr of HAF black for maximum tensile strength (the NR and SBR mixes only contained 30 phr of black). Processing of the SAPA containing rubbers is markedly improved by the presence of SAPA both during milling and moulding with mouldings possessing flaw free surfaces and being free of stress and distortion problems. Physical properties are not improved by the presence of SAPA in CR where its effect seems similar to that of a conventional plasticiser.

Nitrile Rubber and SAPA (Table 5 and Figure 4)

The effect of SAPA on the viscosity and cure properties of NBR is similar to that of a conventional ester plasticiser such as di-octyl phthalate (DOP). With the proportion of SAPA used in this comparison the effect on physical properties is increased as SAPA contradictorily given NBR a higher tensile strength but lower tear strength; an explanation of this may be seen by observing that the compression set of the SAPA/NBR is exceptionally low (6.5%) hence the SAPA/NBR may have a greater degree of cure and hence crosslinking than its DOP/NBR counterpart though this is not indicated by the ODR results of Figure 4 which show DOP and SAPA to give the NBR similar rates and states of cure. Processability of SAPA containing nitrile rubber was markedly superior to the DOP control.

Series 5 Experiments. SAPA as an accelerator of rubber vulcanisation

In all these investigations a common feature is the ability of the SAPA to act as a cure rate and cure state promoter and it was decided to examine its potential as a rubber accelerator. As a base compound for this investigation a typical NR/SBR truck tyre sidewall compound (see Table 6) was chosen in which to vary SAPA and the other ingredients of a conventional curing system.

**Table 6 - Truck Tyre Compound used to examine the potential of SAPA as an accelerator.**

| | |
|---|---|
| NR (SMR20) | 30 pbw |
| SBR 1500 | 70 |
| FEF Carbon Black | 51 |
| IPPD (isopropylparaphenylene diamine) | 2 |
| Microcrystalline WAX | 3 |
| Zinc oxide | 4 |
| Stearic acid | 2 |
| Santocure MOR | 0.25 |
| CBS | 0.25 |
| Sulphur | 2 |
| Processing oil/additive | Variable |

Comparison of SAPA with Common Rubber Processing Oils (Table 7)

It is noteworthy, from the data in Table 7, that the SAPA containing rubber (10 phr SAPA) has a higher strength than its hydrocarbon oil analogues; its strength is about the sane as that of a non-oil containing mix, but, the SAPA mixes process and flaws exceptionally easily.

Also, it is observed that the mix containing only SAPA has a very short scorch time, 3', at the relatively high level of 10 phr SAPA used and hence is acting as a cure rate accelerator to the extent of perhaps being able to induce scorch problems. This aspect of scorch control is now examined in detail as mixes with scorch times of 3' are not usually considered as practical for processing by the rubber industry's tyre manufacturers.

It was thought possible that SAPA was performing similarly to stearic acid but the data in Table 7 demonstrates that the modes of action of SAPA and stearic acid must be different.

Table 7 - Comparison of SAPA with Rubber Processing Oils/Additives

| | No oil | Aromatic oil | Naphthenic oil | Stearic acid | Strucktol SWB 212 | SAPA |
|---|---|---|---|---|---|---|
| Tensile strength MPa | 19.3 | 17.9 | 16.4 | 19.5 | 19.5 | 19.5 |
| % E.B. | 580 | 660 | 660 | 580 | 570 | 595 |
| 300% modulus, MPa | 8.4 | 6.5 | 5.7 | 8.6 | 8.7 | 8 |
| Hardness IRHD | 61 | 53 | 51 | 65 | 62 | 57 |
| % Resilience | 47 | 44 | 46 | 44 | 44 | 50 |
| Tear strength N/2 mm sample | 91 | 85 | 115 | 114 | 94 | 129 |
| <u>Cure Properties</u> | | | | | | |
| $t_{90}$ at 160°C | 16 | 20½ | 22 | 21½ | 20 | 7 |
| Mooney viscosity 100°C | 47 | 43 | 42 | 40 | 42 | 50 |
| Mooney scorch ML 125°C | 20 mins | 24 | 19½ | 22½ | 24½ | 3 |
| Banbury mixing time | 13 mins | 10 | 10 | 10 | 10 | 10 |
| Dump temperature °C | 135 | 115 | 115 | 124 | 126 | 120 |
| Proportions of Processing aid in phr | 0 | 10 | 10 | 10 | 10 | 10 |

Table 7 - (continued)

| | Naphthenic oil (sun oil) Circosol 4240 | | | | Struktol SWb212 | Stearic acid | 5phr Iraqi oil + 5phr Strucktol SWb212 | 5phr Iraqi oil + 5phr stearic acid | SAPA | 5phr Iraqi oil + 5phr SAPA |
|---|---|---|---|---|---|---|---|---|---|---|
| | 5phr | 7.5phr | 10phr | 12.5phr | 10phr | 10phr | 5 I. oil + 5 SWb 212 | 5phr I. oil + 5 phr stearic acid | 10phr | |
| Tensile strength MN/m$^2$ | 18.9 | 18.5 | 16.4 | 16.7 | 19.5 | 19.5 | 18.7 | 18 | 19.5 | 17 |
| 100% modulus MPa | 2.1 | 2 | 1.6 | 1.5 | 2.4 | 2.6 | 2.3 | 2 | 2.2 | 1.5 |
| 300% modulus MPa | 7.6 | 7.3 | 5.7 | 5 | 8.7 | 8.6 | 8 | 7.4 | 8 | 5 |
| Tear strength N/2mm thick sample | 92 | 97.5 | 115 | 111 | 94 | 114 | 111 | 109 | 129 | 13 |
| % Elongation at break | 615 | 630 | 660 | 715 | 570 | 580 | 590 | 600 | 595 | 670 |
| Hardness IRHD | 56 | 55 | 51 | 50 | 62 | 65 | 58 | 56 | 57 | 56 |
| Rebound resilience % | 48 | 46 | 46 | 45 | 44 | 44 | 45 | 46 | 50 | 48 |
| Optimum curing time ($T_{90}$) at 160°C | 18'30 | 17 | 22 | 25 | 20 | 21'30 | 20'30 | 21'30 | 7 | 7 |
| Mooney viscosity ML 1+4 100°C | 47 | 42 | 42 | 39 | 42 | 40 | 48 | 44 | 50 | 40 |
| Mooney scorch ML 1+4 125°C | 19'30 | 20'30 | 19'30 | 23'30 | 24'30 | 22'30 | 19 | 18'30 | 3 | 4 |
| Mixing cycle, mins | 10 | 10 | 10 | 11 | 10 | 10 | 10 | 10 | 10 | 10 |
| Starting temperature °C | 20 | 21 | 20 | 19 | 20 | 18 | 21 | 18 | 20 | 19 |
| Dump temperature °C | 122 | 117 | 115 | 117 | 126 | 124 | 114 | 112 | 120 | 117 |

Elimination of the Cure Activation and Acceleration Systems

It was observed from the results of Table 7 that whilst the physical properties of SAPA containing rubber vulcanisates were better than its processing oil analogues by between 5-15% though similar to the flow additives Struktol SWB 212 and Stearic Acid, the scorch time of the SAPA mixes was short at the

relatively high proportions (1 to 10) used, preferably 7.5p. Hence an investigation using the base compound of Table 6, was conducted to try and resolve this scorch problem; the method was to omit the zinc oxide/stearic acid activator and accelerator system from the rubber formulation; initially some PVI [(d)] was retained to try and retard cure but this was found to be ineffective (see Table 8) and not required.

Table 8 - Elimination of the cure activator and accelerator systems from SAPA containing rubber formulations
Base mix, as shown in Table 6.
All mixes contained 2phr of sulphur (Banbury mixed)

Table 8

| Mix No. | Reducing SAPA | | | | |
|---|---|---|---|---|---|
| | 1 | 2 | 3 | 4 | 5 |
| No accelerator/ activator present in mix | 7.5 phr SAPA<br>Retarder PVI = 0.5 phr<br>ZnO = 0<br>SA = 0<br>CBS = 0<br>MOR = 0 | 3 phr SAPA<br>Retarder PVI = 0.5 phr<br>ZnO = 0<br>SA = 0<br>CBS = 0<br>MOR = 0 | 2 phr SAPA<br>Retarder PVI = 0.25 phr<br>ZnO = 0<br>SA = 0<br>CBS = 0<br>MOR = 0 | 1. 5 phr SAPA<br>Retarder PVI = zero<br>ZnO = 0<br>SA = 0<br>CBS = 0<br>MOR = 0 | 1 phr SAPA<br>Retarder PVI=zero<br>ZnO = 0<br>SA = 0<br>CBS = 0<br>MOR = 0 |
| | Cure Properties | | | | |
| Mooney Scorch at 125°C ($t_5$) mins | 7'30 | 13 | 12 | 12 '30 | 17 |
| Mooney viscosity ML 1+4 100°C | 38 | 41 | 44 | 44 | 46 |
| Optimum curing time at 140°C mins | 15' | 21'50 | 23' | 38 | 39'30 |
| | Physical Properties | | | | |
| Tensile strength MPa | 15 | 16.5 | 15.5 | 15.9 | 15.3 |
| 100% modulus MPa | 2.15 | 2.45 | 2.5 | 2.61 | 2.3 |
| 300% modulus MPa | 7 | 8.5 | 8.5 | 9.2 | 8.3 |
| Tear Strength N/2 mm | 82 | 76 | 68 | 57 | 58 |
| %Elongation at break | 580 | 520 | 500 | 480 | 500 |
| Hardness IRHD | 55 | 59 | 59 | 61 | 60 |
| Rebound resilience % | 47 | 46 | 47 | 49 | 49 |

The results of Table 8 show that relatively high SAPA proportions (e.g. 7.5p) give short scorch times (6-7 minutes) but by reducing the SAPA to 1-3 phr level increases the scorch time to 17-13 minutes, usually considered industrially acceptable. Also, using SAPA, it is possible to eliminate the conventional cure activation system (ZnO and Stearic Acid) and the delayed action accelerators (CBS and Santocure MOR) and, the prevulcanisation inhibitor PVI, whilst retaining the principal cross-linking agent, sulphur, at the modest proportion of 2 phr. Physical properties remain consistently good over the range of SAPA proportions used, 1-7 phr, with only a reduction in hardness becoming apparent at the higher (7.5 p) SAPA

levels.

The processing and flow properties of all SAPA containing systems were found to be outstandingly good (see later).

This combination of cure activation and acceleration plus processability properties in a rubber mix is considered to be unique.

Series 6 Experiments. Zinc Oxide as a Scorch Control Additive in NR/SBR Rubber Mixes Accelerated with SAPA (Table 9).

Table 9 demonstrates the effect of first introducing ZnO and then later stearic acid into a rubber mix containing only sulphur as a curative and from which the conventional accelerators have been omitted. It can be seen that when no ZnO and stearic acid is present a mix with 1.5 phr of SAPA has a scorch time of 15' and an optimum ($t_{90}$) cure time of 22'. Introducing 1 phr of ZnO increases the scorch time from 15' to 100' and the $t_{90}$ cure time from 22' to 42'; further additions of ZnO (mixes A and B) and later stearic acid (mix B) have little to no effect on further extensions of scorch time or $t_{90}$ curing time. The inclusion of the ZnO results in some reduction of tensile strength.

The use of stearic acid as part of the acitvator system does not seem to be necessary in the formulation.

Table 9 - Zinc oxide as a scorch control additive in NR/SBR SAPA rubber mixes

Base compound NR/SBR mix of Table 6 (2phr of sulphur - mill mixed) (1.5 phr of SAPA)

| | A | B | C | D |
|---|---|---|---|---|
| Variable | NR/SBR Blend No accelerator Reducing ZnO/Stearic acid | No accelerator | No accelerator | No accelerator No ZnO/Stearic acid |
| Property | ZnO = 4 phr Stearic acid = 2phr | ZnO = 2 phr Stearic acid = 1phr | ZnO = 1 phr Stearic acid = zero | |
| Cure Properties | | | | |
| Mooney Scorch at 125°C, min. | 110 | 100 | 100 | 15 |
| Mooney viscosity ML 1+4 100°C | 43 | 42 | 47 | 50 |
| Optimum curing time at 160°C ($T_{90}$) | 41'30 | 40' | 42'30 | 22 |
| Physical Properties | | | | |
| Tensile strength MPa | 13.3 | 14.2 | 14.87 | 17 |
| 100% Modulus MPa | 1.96 | 2.1 | 2.3 | 2.7 |
| 300% Modulus MPa | 6 | 6.8 | 7.7 | 9.8 |
| Tear strength N/2mm Thick sample | 71.6 | 68.8 | 67 | 60 |
| % Elongation at break | 570 | 535 | 505 | 475 |
| Hardness IRHD | 56 | 54 | 57 | 57 |
| Rebound Resilience '%'. | 43.5 | 44 | 45 | 53 |

Zinc Oxide as Scorch Control Additive in NR mixes containing SAPA. (Table 10)

An investigation was conducted to ascertain whether the scorch retardation effect of ZnO, apparent in the NR/SBR blend, also applied to a single polymer system, namely NR. The results are given in Table 10 for a carbon black reinforce formulation similar to that of Table 6 but based on only NR; the accelerators CBS and Santocure MOR were also present at 0.25/0.25 parts respectively (as in Table 6). It is seen that decreasing the ZnO content progressively from 4 part to 1 parts increases the scorch time in a regular and uniform manner from 14' to 24' in mixes containing 0.5 p SAPA at higher SAPA levels, i.e. 1.5 parts the effect of the ZnO on reducing scorch, whilst apparent, is not so pronounced. This observation confirms, in principle, the ability of ZnO to control scorch in SAPA containing rubber formulations. It is considered that stearic acid plays no role in scorch control in this instance.

Table 10 - Zinc oxide as a scorch control additive in NR mixes with SAPA

| | Reducing ZnO and Stearic acid (SA) proportions | | | | | |
|---|---|---|---|---|---|---|
| | 1.5phr SAPA | 1.5phr SAPA | 1.5phr SAPA | 0.5phr SAPA | 0.5phr SAPA | 0.5phr SAPA |
| Accelerators CBS/MOR present | SMR20=100phr ZnO-4phr SA =2phr S=2phr CB(FEF) = 51phr | SMR20=100phr ZnO=2phr SA =1phr S=2phr FEF=51phr | SMR20=100phr ZnO=1phr S =2phr FEF=51phr | SMR20=100phr ZnO=4phr SA=2phr S=2phr FEF=51phr | SMR20=100phr ZnO=2phr SA=1phr S=2phr FEF=51phr | SMR20=100phr ZnO= 1phr S=2phr FEF=51phr |
| Cure properties Mooney viscosity ML 1+4 100°C | 28 | 29 | 33 | 34 | 44 | 51 |
| Mooney Scorch 125°C(minute) | 14 | 12 | 9 | 24 | 16 | 14 |
| Optimum curing time ($t_{90}$) at 160°C(min) | 12'40 | 12'30 | 9'50 | 15'30 | 15'30 | 14 |
| Physical Properties Tensile strength MPa | 13.4 | 15.8 | 12.6 | 13 | 14.3 | 12 |
| 100% modulus MPa | 2 | 1.88 | 1.76 | 1.96 | 2.4 | 1.6 |
| 300% modulus MPa | 9.2 | 9.3 | 7.7 | 8.86 | 10 | 6.8 |
| Tear strength N/2mm | 66 | 50 | 42 | 36 | 38 | 37 |
| %Elongation at break | 375 | 415 | 410 | 385 | 370 | 430 |
| Hardness IRHD | 52 | 52 | 48 | 51 | 53 | 49 |
| Rebound Resilience % | 54 | 50 | 57 | 53 | 55 | 56 |

Acclerators CBS and Santocure MOR are present at 0.25/0.25 parts

<u>A Simple Mechanism Proposed to Account for the Multiplicity of Functions of Cationic Surfactant in Rubber Compounding - Ambient Temperature State</u>

The cationic surfactant was exemplified above by N-tallow-1,3-diamino propane dioleate ( SAPA),

however, it can also take the form of an N-alkyl propylene diamine $(R(NH_2)(CH_2)_3NH_3)^{2+}2(R_1COO^-)$ where R and $R_1$ are long chain alkyl groups and $R_1$ is stearic acid or it can be in the form of an aliphatic diamine as represented by N-tallow-1,3-diamino-propane dioleate, for example.

In this form the salt of the diamine functions as an internal processing aid and a filler-rubber surfactant enabling wetting to take place between the rubber (hydrophobic)/filler (hydrophilic) interfaces. On heating to vulcanisation temperature, dissociation takes place forming a secondary amine vulcanisation accelerator $R\ NH_2(CH_2)_3NH_2$ and a fatty acid $2\ R_1\ COOH$ as an internal mould release agent and cure rate contoller.

Proposed Mechanism to Account for Increase Scorch Time (Cure Retardation) When Zinc Oxide is used in a Rubber Formulation containing the active Surfactant

The surfactant may take the form of the salt of an alkyl propylene diamine, shown as $(R\ NH_2(CH_2)_3NH_3)^{2+}2(RCOO)^-$ which on heating in the presence of the zinc oxide (or lead oxide) is represented by $(RCOO)_2Zn + H_2O + R\ NH(CH_2)_nNH_2$ where the zinc salt of the fatty acid which acts as a retarder (being acidic) to the diamine accelerator produced, and the diamine acts as an accelerator of cure.

Also ZnO is thought to react with $H_2S$, considered to be produced during all sulphur type cures, hence causing a decrease in the quantity of the hydrogen sulphide normally available and required to produce the nucleophilic hydrosulphide, sulphide, or sulphite ions; these ions are considered essential to effect the hydrolysis of the cyclic

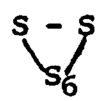

chain of sulphur, enabling it to function as a crosslinking agent in rubber. Hence a reduction in their availability due to $H_2S$ reacting with ZnO would account for cure retardation.

Series 7 Experiments. Effect of SAPA on Compression Set (and Cure State) (Table 11)

Table 11 and Figure 5 illustrate the effect on compression set of SAPA (3 phr) compared with zero oil and other common rubber mineral based processing oils (7.5p) and mineral oil/processing aid combinations (5p + 5p). It is obvious from these results that the SAPA containing compound reaches a higher state of cure than the non-oil and oil and oil/processing aid formulations as shown by the ODR of Figure 5, and that this observation is confirmed by the lower compression set data for SAPA mixes of Table 11. SAPA containing mixes have a compression set value about 12% better (i.e. 25.5%) than the non-oil containing control which has the next best value of 30% compression set. Both SAPA and non-oil formulations are superior to all oil containing formulations.

A further point of interest is that the density (S.G.) of SAPA mixes was less than that of all other indicating relatively low volume cost potential.

Table 11 - Effect of SAPA on Compression Set (and cure state)

| Formulation | *Compression Set | Specific Gravity |
|---|---|---|
| Zero oil i.e. no plasticiser | 30 | 1.1385 |
| 7.5 phr Iraqi oil (aromatic oil) | 31 | 1.1328 |
| 7.5 phr naphthenic oil. Cirosol 4240 (1) | 31 | 1.1293 |
| 7.5 phr Sun oil. Sundex 790 (1) (Aromatic oil) | 32 | 1.1343 |
| 7.5 phr Dutrex 729 (aromatic oil) (2) | 31.5 | 1.1328 |
| 5 phr Iraqui oil + 5 phr Strucktol Sb 212 (3) | 32 | 1.1356 |
| Surface active plasticiser 3phr (+0.5 p ZnO) Accelerator | 25.5 | 1.1166 |

*Compression set was performed at 25% strain and 70ºC for 48 hours.

(1) Trade name of sun Oil Company

(2) Trade name of Shell

(3) Trade name of Schill and Seilacker

Series 8 Experiments. Processing Studies using SAPA (Tables 12-14) (Figure 6)

The processing properties of rubber (NR/SBR of table 6) containing SAPA was compared with various aromatic and naphthenic mineral oils, and also with those mixes which contained mineral oils plus the processing aids, stearic acid and Struktol SWb 212. Details of the experimental procedures used and results obtained are given in Tables 12-14 with the exception of the extrusion conditions which are given below.

Table 12 - Internal Mixing Studies of SAPA Compared with Hydrocarbon Mineral Oils and Processing Aids

| Mix No. | Formulation | Starting Temp. °C | Dump Temp. °C | Mooney Viscosity (1+4) 100°C | Power Consumption KW hour | Total Work $mJ.m^{-3}$ | Mixing Cycle Mins. | Ram Pressure $kg.cm^{-2}$ | Fill Factor |
|---|---|---|---|---|---|---|---|---|---|
| 1(A) | Zero Oil i.e. No (Plasticiser) | 20 | 135 | 47 | 0.535 | 1533 | 13 First Stage Only | 4.5 | 0.8 |
| 2(A) | 7.5 phr Iraqi Oil (Aromatic Oil) | 18 | 119 | 41 | 0.38 | 1089.2 | 10 | 4.5 | 0.8 |
| 3(A) | 7.5 phr Naphthenic Oil Circosol 4240 (1) | 21 | 117 | 42 | 0.3625 | 1039 | 10 | 4.5 | 0.8 |
| 4(A) | 7.5 phr Dutrex 729 (Aromatic Oil) (2) | 19 | 115 | 45 | 0.3875 | 1110 | 10 | 4.5 | 0.8 |
| 5(A) | 7.5 phr Sun Oil Sundex 790 (1) (Aromatic Oil) | 20 | 119 | 45 | 0.39 | 1117 | 10 | 4.5 | 0.8 |
| 6(A) | 5 phr Iraqi Oil + 5 phr Stearic Acid | 18 | 112 | 44 | 0.3575 | 1024 | 10 | 4.5 | 0.8 |
| 7(A) | 5 phr Iraqi Oil + 5 phr Strucktol SWB 212 (3) | 21 | 114 | 48 | 0.3675 | 1053 | 10 | 4.5 | 0.8 |
| 8(B) | Surface Active Plasticiser Acclerator 3phr (+ 0.5 p ZnO) | 20 | 122 | 55 | 0.385 | 1103 | 10 | 4.5 | 0.8 |

Scorch Time 27 from 13 (1) Sun Oil Company; (2) Shell; (3) Schill and Schillaker

Note A laboratory Banbury BR model was used of 1200 ml capacity.

Note A indicates the use of formulation A (conventional organic acclerators present)
B indicates the use of formulation B (ie no organic accelerators present)

Table 12 (continued)

| Formulation A | Phr |
|---|---|
| SMR 20 | 30 |
| SBR 1500 | 70 |
| ZnO | 4 |
| S | 2 |
| CBS | 0.25 |
| Santocure MOR | 0.25 |
| Flectol-H | 0.75 |
| IPPD | 2 |
| Stearic Acid | 2 |
| Wax | 3 |
| Plasticiser | as mentioned in the table |
| FEF | 51 |

** Die Swell : it is calculated by dividing the die swell index by the Specific Gravity of each compound and then dividing the products by $0.5cm^2$ which is the cross sectional area of Garvey Die.

| Formulation B | Plasticiser containing formulations Phr | |
|---|---|---|
| SMR 20 | 30 | |
| SBR 1500 | 70 | |
| ZnO | 0.5 | ) used to extend scorch time from 13 mins |
| S | 2 | ) to 27 minutes. |
| Flectol-H | 0.75 | |
| IPPD | 2 | |
| Wax | 3 anti-ozonant type | |
| Plasticiser | As mentioned in the table | |
| FEF Black | 51 | |

1. Each compound was passed once through an open mill having a 9 inch diameter and 18 inches length and the nip was kept constant (3mm opening) throughout the passing of each compound.

2. Total Work is calculated as follows:

$$\text{Total Work is } mJ/m^3 = \frac{\text{Total energy}}{\text{Fill Factor x Banbury chamber volume}}$$

$$= \frac{mJ}{0.8 \times 1570\ cc}$$

$$= \frac{mJ}{1256\ cc}$$

$$= \frac{mJ}{1256\ m^3} \times 10^6$$

Total energy was calculated using a counter which is directly connected to the main power meter of the Banbury, and it was found that each unit is equal to 18 kJ. So for each mix the number of units was counted and accordingly the power was calculated.

Table 13 - Capillary Rheometer Extrusion Studies of SAPA with Hydrocarbon Mineral Oils and Processing Aids

* Extrusion using Davenport Rheometer

| Formulation | Flow Rate g/min | Die Swell Ratio | Shear Stress TW |
|---|---|---|---|
| Zero Phr Oil (ie. No Plasticiser) | 3.99 | 1.15 | 277 |
| 7.5 phr Iraqi Oil (Aromatic Oil) | 3.99 | 1.20 | 243 |
| 7.5 phr Naphthentic Oil Circosol 4240 (1) | 3.99 | 1.20 | 253 |
| 7.5 phr Dutrex 72g (2) | 3.99 | 1.17 | 260 |
| 7.5 phr Sun Oil Sundex 790 (1) (Aromatic Oil) | 3.99 | 1.17 | 260 |
| 5 phr Iraqi Oil + 5 phr 4 Stearic Acid | | 1.20 | 243 |
| 5 phr Iraqi Oil + 5 phr Strucktol SWB 212 (3) | 4.06 | 1.15 | 278 |
| Surface Active Plasticiser Accelerator 3phr (+0.5 p ZnO) | 4.11 | 1.25 | 351 |

(1) Sun Oil Company
(2) Shell
(3) Schill and Seilacker

* Flow rate & die swell were calculated at a shear rate of 58.3 $sec^{-1}$

* The barrel temperature was between 97 - 100°C

* The die used has the following dimensions:

1. length = 15mm
2. diameter = 2 mm

Note

The following equations were the basis for the calculation of the shear rate and the shear stress.

Shear rate Y ($sec^{-1}$) $= \frac{4Q}{\pi r^3}$

where Q = volumetric flow rate = output rate
r = radius of die

Shear Stress (TW) $= \frac{\Delta Pr}{2L}$ $kN/m^2$

$\Delta P$ = pressure in barrel
r = radius of die
L = length of die

Table 14 - Extrusion - Processability Evaluation by the use of Garvey Die of SAPA v Oil v Oil/Processing Aid

| Formulation* | Flow Rate m/min | Die Swell Index g/cm | **Die Swell Ratio | Head Pressure $kN/m^2$ | Die Temp. of extrudate °C | Formulations Grading *** Swelling and Porosity | Edge | Surface | Corners |
|---|---|---|---|---|---|---|---|---|---|
| Zero Oil (ie No plasticiser) | 4.22 | 0.833 | 1.463 | 4343 | 98 | 4 | 3 | 4 | 4 |
| 7.5 phr Iraqi Oil (Aromatic Oil) | 4.24 | 0.842 | 1.486 | 3723 | 95 | 4 | 3 | 4 | 4 |
| 7.5 phr Naphthenic Oil Circosol 4240 (1) | 4.25 | 0.838 | 1.484 | 4033 | 95 | 4 | 3 | 4 | 4 |
| 7.5 phr Dutrex 729 (Aromatic Oil) (2) | 4.30 | 0.842 | L.486 | 4095 | 95 | 4 | 4 | 4 | 4 |
| 7.5 phr Sun Oil Sundex 790 (Aromatic Oil) (1) | 4.24 | 0.842 | 1.484 | 3909 | 95 | 4 | 4 | 4 | 4 |
| 5 phr Iraqi Oil + 5phr Stearic Acid | 4.24 | 0.84 | 1.489 | 3971 | 94 | 4 | 3 | 4 | 4 |
| 5 phr Iraqi Oil + 5 phr Strucktol SWB 212 (3) | 4.26 | 0.84 | 1.479 | 4288 | 94 | 4 | 4 | 4 | 4 |
| +Surface Active Plasticiser Accelerator 3 phr (+0.5 ZnO) | 4.31 | 0.835 | 1.496 | 4964 | 94 | 4 | 4 | 4 | 4 |

(1) Sun Oil Company; (2) Shell; (3) Schill and Seilacker Extruder used was a cold feed type of L/D ration 20:1

Extrusion Conditions for SAPA Evaluation

The conditions for extrusion were kept constant throughout the extrusion of the eight compounds and these conditions were as follows:-

1. Temperature of the mill was kept constant at 20°C and the mixing (warming) of the compounds also kept constant, for a period of 4 minutes cutting of the compound was carried out through an interval of 30 seconds.

2. Extruder

| | |
|---|---|
| A. - Temperature of the barrel | = 70°C |
| B. - Temperature of the head | = 110°C |
| C. - Temperature of the die | = 110°C |
| D. - Screw Speed | = 45 rpm |

3. A take off conveyor was kept constant as a speed of 4ft/min to prevent any stretching.

The type of extruder used is 1½" extruder of Farrel-Bridge Ltd which has a length to diameter ratio of 20:1. Formulations used were the same as those given in Table 12 for the mixing study.
Die swell was calculated by dividing the die swell index by the specific gravity of each compound and the results were divided by the cross-sectional area of that of Garvey die which is 0.5 $cm^2$.

Extrusion

Figure 7 also demonstrates use of SAPA as a processing aid in both black and silica filled mixes. It is self-evident that the inclusion of SAPA in the formulation has resulted in a considerable reduction in the otherwise rough surfaces of both of the extrudates. However, SAPA is found particularly effective as a flow additive in the silica filled mix turning on otherwise unprocessable rubber with a compound possessing satisfactory flow. This observation has been found to be generally applicable and SAPA is a particularly effective flow additive for turning "difficult to flow" silica filled rubber mixes into readily processed materials; an additional advantage is that as SAPA, when heated, decomposes and produces in situ a secondary amine then high silica containing formulations can use much lower quantities of accelerators whilst still attaining the same cure state.

Internal Fixing Properties (Table 12)

The mixing parameters of the oil, oil + processing aid, and SAPA rubber mixes were all found to be similar in nature with respect to mixing time, electrical power consumption, and total work input as a result of the mixing operation. However, a special feature observed is that the Mooney viscosity of the SAPA mixes is 8 points greater than the zero oil mixes and 8-14 points, greater than the oil and oil/processing aid mixes. This is considered to indicate that as a result of the heat generated in the rubber by mixing, the SAPA is undergoing or promoting a chemical reaction between itself and the rubber mix which results in an increase in Mooney viscosity. It is postulated that the SAPA is, to some extent, functioning as a coupling agent between the filler and the rubber and, or, perhaps as a surfactant between the filler and the rubber. The proposal that SAPA acts as a coupling agent is also based on the observation that all SAPA mixes possess higher modulus values than their oil containing controls (e.g. see Table 7).
As this increase in Mooney viscosity is also observed to occur in unfilled (gum) rubber mixes (see Tables 1-(a) & 2) an alternative possibility that must be considered is the reaction of the SAPA directly with the rubber molecule itself to produce in situ a few chemical crosslinks; should such a process occur it would be analogous to the formation of a lightly gelled rubber similar to the SP natural rubber or divinyl benzene SBR series.

Extrusion Processability (Tables 13 and 14 and Figure 6) (graphs A to H)

Table 13 gives the extrusion processability measured by capillary rheometer; the results apparently show that the use of SAPA as an alternative to mineral oils for processing purposes give unvulcanised rubber with higher green strength as indicated by an extrusion shear stress of 351 $kNm^{-2}$ for SAPA mixes compared with a range of 243-278 for the more conventional rubber mixes: this confirms the earlier observation of SAPA mixes possessing higher Mooney viscosity which is now reflected in the higher shear stress needed for extrudates.
Table 14 gives Garvey Die data for all SAPA mineral oil, and mineral oil plus processing oil mixes.
All this data confirms the excellent processability of SAPA mixes compared with the conventional rubber formulations demonstrating that no abnormal or adverse processing phenomenon result from the use of SAPA as a rubber compounding ingredient.

SAPA as a dispersant in Natural Rubber (an example of a strain crystallisable rubber)

SEM micrograph (x 7,000 magnification) of a torn vulcanisate surface to illustate the ability of the SAPA surfacant as a filler dispersion and wetting agent in Natural Rubber.

(a) contains no SAPA. Figure 8(a)
(b) contains 2 phr of SAPA. Figure 8(b)
The micrograph (a) clearly shows lumps of undispersed filler aggregates whilst in (b) the number of undispersed aggregates is considerably reduced. The tensile strength of the SAPA containing mix is ca. 20% greater than its non-SAPA containing comparison.
(Formulation: Nr100, FEF Black 50, Aromatic Oil 5, Flectol H 2, CBS 0.5, Suphur 2)

SAPA as a filler wetting agent in SBR (an example of a non-strain crystallisable rubber)
SEM micrograph (x7,000 magnification) of a torn SBR vulcanisate surface.

(c) contains no SAPA and the relatively poor dispersion of filler aggregates can be seen as represented by large lumps. Figure 9(a) Tensile strength = 18 MPa, 300% modulus 8 MPa
(d) contains SAPA (2 phr) and this has the result of reducing the number of filler aggregates (fewer lumps and voids are visible) and also reducing the relative size of residual aggregates. Tensile strength = 22 MPa. 300% modulus 11 MPa. Figure 9(b)
The better dispersion of the filler through the use of SAPA has increased the tensile strength by 22% and the 300% modulus by 37%.

Filler dispersing properties of SAPA

The use of a cationic surfactant as a dispersing and wetting agent for filler in rubber can be seen by inspecting the scanning electron microscopy (SEM) micrographs in Figures 8 and 9. The torn surface of rubber vulcanisates containing no SAPA show relatively large rugosities and voids on their torn surfaces, whilst SAPA containing formulations have almost smooth protrusion and void free surfaces. This is taken to indicate superior aggregate breakdown, filler dispersion and also surface wetting of SAPA containing formulations. Results are shown in Figures 8 and 9. The better filler dispersion has also resulted in higher tensile strength in these particular rubber mixes where filler dispersion was only of average quality. It is speculated that the use of SAPA and similar cationic surfactants in rubber compounding would result in more reproducible rubber mixing operations.

Discussion

It is considered that SAPA has demonstrated multiple functions when used as a rubber compounding additive in various rubbers. In all the classes of rubber examined it functioned as an excellent processing aid or flow additive at low proportions (ca. 0.5 - 2.0 phr). With certain rubbers such as NR, and N/SBR blends in both unfilled and filler reinforced compounds it increases Mooney viscosity and hence green strength; in other rubbers such as SBR, CR and NBR it functions as a flow additive only and does not increase the green strength. SAPA is universal in its effect as a processing flow additive with all common rubbers; it also provides excellent roll release and mould release properties.

Physical properties of vulcanisates of non-polar rubbers such as NR, NR/SBR blends are all increased by the inclusion of SAPA with increases typically between 15-30% of the control mixes based on conventional oils or other flow additives. SAPA is observed to be particulary effective when used in precipitated silica reinforced SBR rubber (see Table 3) where it outperforms Tea.

SAPA also can function as a cure rate promoter; rubber mixes based on the conventional organic accelerator/zinc oxide/stearic and acceleration system can be further accelerated by the inclusion of 0.5 - 2.0 phr of SAPA in the formulation enabling if desired, the proportion of organic accelerator to be reduced. However, it is also observed that for NR, SBR and NR/SBR blends the SAPA will function as an accelerator system in its own right enabling fast curing formulations to be obtained without the presence of any organic acclerator (e.g. CBS/zinc oxide/stearic acid combination (Table 8). Delayed action curing of SAPA mixes (i.e. longer scorch times) can be obtained by using combinations of SAPA with zinc oxide e.g. 2p of SAPA + 0.5 p ZnO (Table 9).

It is observed that several types of cationic chemical compounds demonstrate, in principle, multipurpose roles similar to SAPA but with interesting variants. For example, degrees of delayed action cure effects are shown dependent on the particular chemical structure of the surfactant.

Thus the process of the invention enables the cationic surfactant to perform a multipurpose role by

combining the functions of internal processing aid and mould release agent, accelerator, and, filler-rubber coupling/wetting agent properties which enhance the strength of rubber vulcanisates.

In addition to enhancing processability of rubber by increasing flow and simultaneously providing mould release and enhancing the properties of the final vulcanisate the cost of a typical SAPA containing rubber formulation is expected to be less than its conventionally accelerated counterpart.

Other properties are also considered to be capable of being improved in rubber formulations by the inclusion of SAPA in the recipe and are identified as follows:

1. Electrical conductivity is increased giving rise to possible advantages in compounds that need to be micro-wave heated more quickly, also by acting as a non-black anti-static agent in rubber compounds.
2. An anti-static agent for non-black (coloured) rubber vulcanisates.
3. Rubber vulcanisates incorporating SAPA have significantly lower coefficient of friction surfaces and may be useful in applications where low surface drag is important.
4. Reduction in mould fouling - has also been observed, especially with fluoroelastomer rubbers, and also with other elastomers.

## Claims

**1.** A process for treating rubber comprising mixing the rubber with a cationic surfactant and curing the mixture, said cationic surfactant comprising an imidazoline having only two nitrogen atoms in the molecule or a carboxylate salt of an N-alkyl alkylene diamine, said mixture optionally containing a conventional organic cure accelerator and optionally containing a conventional cure activator system, wherein the amount of said cationic surfactant is greater than or equal to the amount (if any) of said conventional organic cure accelerator.

**2.** A process as claimed in claim 1 wherein said cationic surfactant is 1 (2-hydroxyethyl)-2-heptadecenyl imidazoline or 1-hydroxyethyl-2-oleyl imidazoline.

**3.** A process as claimed in claim 1 wherein said cationic surfactant is a carboxylate salt of an alkyl alkylene diamine and is added to said rubber in conjunction with a metal oxide cure retardant.

**4.** A process as claimed in claim 3 wherein said metal oxide is zinc oxide or lead oxide.

**5.** A process as claimed in any of claims 1, 3 and 4 wherein said cationic surfactant is a carboxylate salt of general formula :

$$[R(NH_2)(CH_2)_3NH_3]^{2+}.2\ R_1\ COO^-$$

wherein R and $R_1$ are long chain alkyl groups.

**6.** A process as claimed in claim 5 wherein $R_1$ $COO^-$ is stearate, laurate, palmitate, oleate, the anion of soya acid or the anion of hydrogenated tallow acid.

**7.** A process as claimed in any of claims 1, 3, 4, 5 and 6 wherein said cationic surfactant is a carboxylate salt of N-coco-1,3 diamino-propane; N-tallow-1,3 diamino propane; or N-oleyl-1,3-diamino propane.

**8.** A process as claimed in claim 7 wherein said carboxylate salt is N-tallow-1,3-diamino-propane dioleate; N-stearic-1,3-diamino-propane distearate; or N-oleyl-1,3-diamino-propane dioleate.

**9.** A process as claimed in any preceding claim wherein a filler is incorporated in said rubber.

**10.** A process as claimed in any preceding claim wherein said rubber is vulcanised by heating in the presence of sulphur or a sulphur-donating compound.

**11.** A process as claimed in any preceding claim wherein said rubber is an NR or an SBR or an NR/SBR rubber.

**12.** A process as claimed in claim 11 wherein said rubber is an NR/SBR rubber and said cationic surfactant is present in a proportion of 1 to 3 phr.

**13.** A process as claimed in any preceding claim, wherein no prevulcanisation inhibitor is employed.

**14.** A process as claimed in claim 11 as dependent on claim 9 wherein said rubber is an SBR rubber reinforced with precipitated silica.

**15.** A process as claimed in any preceding claim wherein said mixture is processed at 50°C ± 5°C.

**16.** A process as claimed in any preceding claim wherein said mixture is cured at 150°C.

**17.** A process as claimed in any preceding claim wherein said cationic surfactant is the only cure activator add/or cure accelerator in said mixture.

**18.** A rubber sheet produced by a process as claimed in any preceding claim.

**19.** A moulded rubber article produced by a process as claimed in any of claims 1 to 17.

**20.** A moulded rubber article as claimed in claim 19 which is a tyre.

**Revendications**

**1.** Procédé de traitement du caoutchouc consistant à mélanger le caoutchouc avec un agent tensioactif cationique et à durcir le mélange, ledit agent tensioactif cationique comprenant une imidazoline ayant seulement deux atomes d'azote dans sa molécule ou un sel carboxylate d'une N-alkyl-alkylènediamine, ledit mélange contenant optionnellement un accélérateur organique conventionnel de durcissement et optionnellement un système d'activation de durcissement conventionnel, dans lequel la quantité d'agent tensioactif cationique est supérieure ou égale à la quantité de l'accélérateur organique conventionnel de durcissement, lorsque celui-ci est présent.

**2.** Procédé selon la revendication 1, dans lequel l'agent tensioactif cationique est la 1-(2-hydroxyéthyl)-2-heptadécènylimidazoline ou la 1-hydroxyéthyl-2-oléylimidazoline.

**3.** Procédé selon la revendication 1, dans lequel l'agent tensioactif cationique est un sel carboxylate d'une alkylalkylènediamine, et est ajouté au caoutchouc en association avec un oxyde métallique retardateur de durcissement.

**4.** Procédé selon la revendication 3, dans lequel ledit oxyde métallique est un oxyde de zinc ou un oxyde de plomb.

**5.** Procédé selon l'une des revendications 1, 3 ou 4, dans lequel l'agent tensioactif cationique est un sel carboxylate de formule générale

$$[R(NH_2)(CH_2)_3NH_3]^{2+},2R_1COO^-$$

dans laquelle R et $R_2$ sont des groupes alkyle à longue chaîne.

**6.** Procédé selon la revendication 5, dans lequel l'anion carboxylate $R_1COO^-$ est un anion stéarate, laurate, palmitate ou oléate, l'anion de l'acide de soja ou l'anion de l'acide de suif hydrogéné.

**7.** Procédé selon l'une quelconque des revendications 1, 3, 4, 5 ou 6, dans lequel l'agent tensioactif est un sel carboxylate de N-coco-1,3-diaminopropane, de N-suif-1,3-diaminopropane ou de N-oléyl-1,3-diaminopropane.

**8.** Procédé selon la revendication 7, dans lequel le sel carboxylate est le dioléate de N-suif-1,3-diaminopropane, le distéarate de N-stéaryl-1,3-diaminopropane, ou le dioléate de N-oléyl-1,3-diaminopropane.

**9.** Procédé selon l'une quelconque des revendications précédentes, dans lequel une charge est incorporée dans le caoutchouc.

10. Procédé selon l'une quelconque des revendications précédentes, dans lequel le caoutchouc est vulcanisé par chauffage en présence de soufre ou d'un composé fournissant du soufre.

11. Procédé selon l'une quelconque des revendications précédentes, dans lequel le caoutchouc est un caoutchouc NR, SBR ou NR/SBR.

12. Procédé selon la revendication 11, dans lequel le caoutchouc est un caoutchouc NR/SBR et l'agent tensioactif est présent dans une proportion de 1 à 3 pour cents.

13. Procédé selon l'une quelconque des revendications précédentes, dans lequel aucun inhibiteur de prévulcanisation n'est utilisé.

14. Procédé selon la revendication 11 an combinaison avec la revendication 9, dans lequel le caoutchouc est un SBR renforcé par de la silice précipitée.

15. Procédé selon l'une quelconque des revendications précédentes, dans lequel le mélange est traité à 50 °C ± 5 °C.

16. Procédé selon l'une quelconque des revendications précedentes, dans lequel le mélange est durci à 150 °C.

17. Procédé selon l'une quelconque des revendications précédentes, dans lequel l'agent tensioactif cationique est le seul activateur et/ou accélérateur de durcissement dans le mélange.

18. Feuille de caoutchouc obtenue selon le procédé revendiqué dans l'une quelconque des revendications précédentes.

19. Article moulé en caoutchouc obtenu selon le procédé revendiqué dans l'une des revendications 1 à 17.

20. Article moulé en caoutchouc salon la revendication 19, caractérisé en ce qu'il est un pneumatique.

**Patentansprüche**

1. Verfahren zur Behandlung von Kautschuk, bei dem der Kautschuk mit einem kationischen Netzmittel gemischt wird und die Mischung vulkanisiert wird, wobei das kationische Netzmittel ein Imidazolin aufweist, das nur zwei Stickstoffatome im Molekül besitzt, oder ein Carboxylatsalz eines N-Alkyl-alkylendiamins, wobei die Mischung wahlweise einen herkömmlichen organischen Vulkanisationsbeschleuniger enthält und wahlweise ein herkömmliches Vulkanisatïonsaktivierungssystem, dadurch gekennzeichnet, daß die Menge des kationischen Netzmittels (gegebenenfalls) größer ist oder gleich der Menge des herkömmlichen organischen Vulkanisationsbeschleunigers.

2. Verfahren nach Anspruch 1, dadurch gekennzeichnet, daß das kationische Netzmittel 1(2-Hydroxyethyl)-2-heptadecenylimidazolin oder 1-Hydroxyethyl-2-oleylimidazolin ist.

3. Verfahren nach Anspruch 1, dadurch gekennzeichnet, daß das kationische Netzmittel ein Carboxylatsalz eines Alkyl-alkylendiamins ist und dem Kautschuk in Verbindung mit einem Metalloxid als Vulkanisationsverzögerer zugegeben wird.

4. Verfahren nach Anspruch 3, dadurch gekennzeichnet, daß das Metalloxid Zinkoxid oder Bleioxid ist.

5. Verfahren nach einem der Ansprüche 1, 3 und 4, dadurch gekennzeichnet, daß das kationische Netzmittel ein Carboxylatsalz ist mit der allgemeinen Formel:

$[R(NH_2)(CH_2)_3NH_3]^{2+} . 2\ R_1COO^-$

wobei R und $R_1$ langkettige Alkylgruppen sind.

6. Verfahren nach Anspruch 5, dadurch gekennzeichnet, daß $R_1COO^-$ Stearat, Laurat, Palmitat, Oleat, das

Anion von Sojasäure oder das Anion von hydrierter Talgsäure ist.

7. Verfahren nach einem der Ansprüche 1, 3, 4, 5 und 6, dadurch gekennzeichnet, daß das kationische Netzmittel ein Carboxylatsalz von N-Kokos-1,3-diaminopropan; N-Talg-1,3-diaminopropan; oder N-Oleyl-1,3-diaminopropan ist.

8. Verfahren nach Anspruch 7, dadurch gekennzeichnet, daß das Carboxylatsalz N-Talg-1,3-diaminopropandioleat; N-Stearin-1,3-diaminopropandistearat; oder N-Oleyl-1,3-diaminopropandioleat ist.

9. Verfahren nach einem der vorhergehenden Ansprüche, dadurch gekennzeichnet, daß ein Füllstoff in dem Kautschuk enthalten ist.

10. Verfahren nach einem der vorhergehenden Ansprüche, dadurch gekennzeichnet, daß der Kautschuk vulkanisiert wird durch Erhitzen in Gegenwart von Schwefel oder einer Schwefel liefernden Verbindung.

11. Verfahren nach einem der vorhergehenden Ansprüche, dadurch gekennzeichnet, daß der Kautschuk ein NK oder SBK oder ein NK/SBK-Kautschuk ist.

12. Verfahren nach Anspruch 11, dadurch gekennzeichnet, daß der Kautschuk ein NK/SBK-Kautschuk ist und das kationische Netzmittel in einem Anteil von 1 bis 3 phr vorhanden ist.

13. Verfahren nach einem der vorhergehenden Ansprüche, dadurch gekennzeichnet, daß kein vorvulkanisationshemmstoff verwendet wird.

14. Verfahren nach Anspruch 11 in Abhängigkeit von Anspruch 9, dadurch gekennzeichnet, daß der Kautschuk ein SBK-Kautschuk ist, der mit abgeschiedenem Siliziumdioxid verstärkt ist.

15. Verfahren nach einem der vorhergehenden Ansprüche, dadurch gekennzeichnet, daß die Mischung bei $50^\circ C \pm 5^\circ C$ verarbeitet wird.

16. Verfahren nach einem der vorhergehenden Ansprüche, dadurch gekennzeichnet, daß die Mischung bei $150^\circ C$ vulkanisiert wird.

17. Verfahren nach einem der vorhergehenden Ansprüche, dadurch gekennzeichnet, daß das kationische Netzmittel der einzige Vulkanisationsaktivator und/oder vulkanisationsbeschleuniger in dieser Mischung ist.

18. Eine Kautschukbahn, die mit einem Verfahren gemäß den vorhergehenden Ansprüchen hergestellt wird.

19. Ein Kautschukformteil, das mit einem Verfahren nach einem der Ansprüche 1 bis 17 hergestellt wird.

20. Ein Kautschukformteil nach Anspruch 19, welches ein Reifen ist.

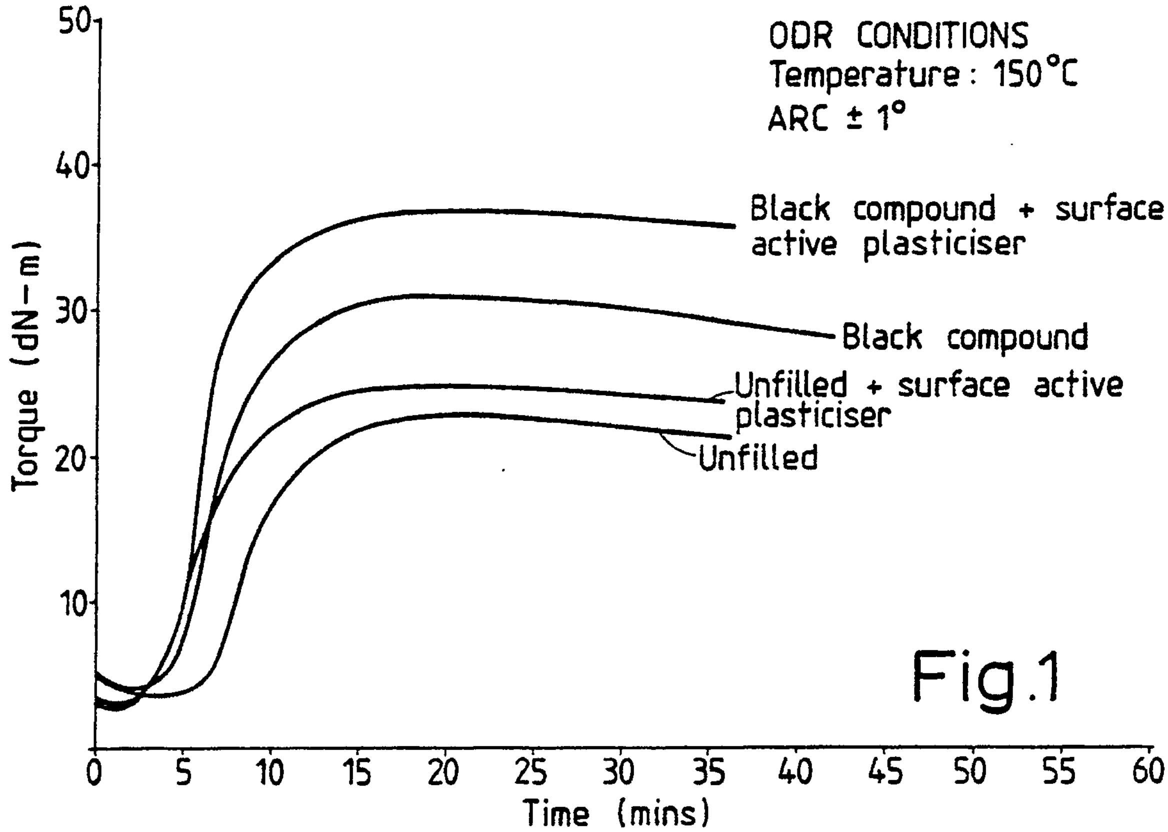
ODR CONDITIONS
Temperature : 150°C
ARC ± 1°
Black compound + surface active plasticiser
Black compound
Unfilled + surface active plasticiser
Unfilled
Torque (dN-m)
Time (mins)
50
40
30
20
10
0
5
10
15
20
25
30
35
40
45
50
55
60

Fig.1

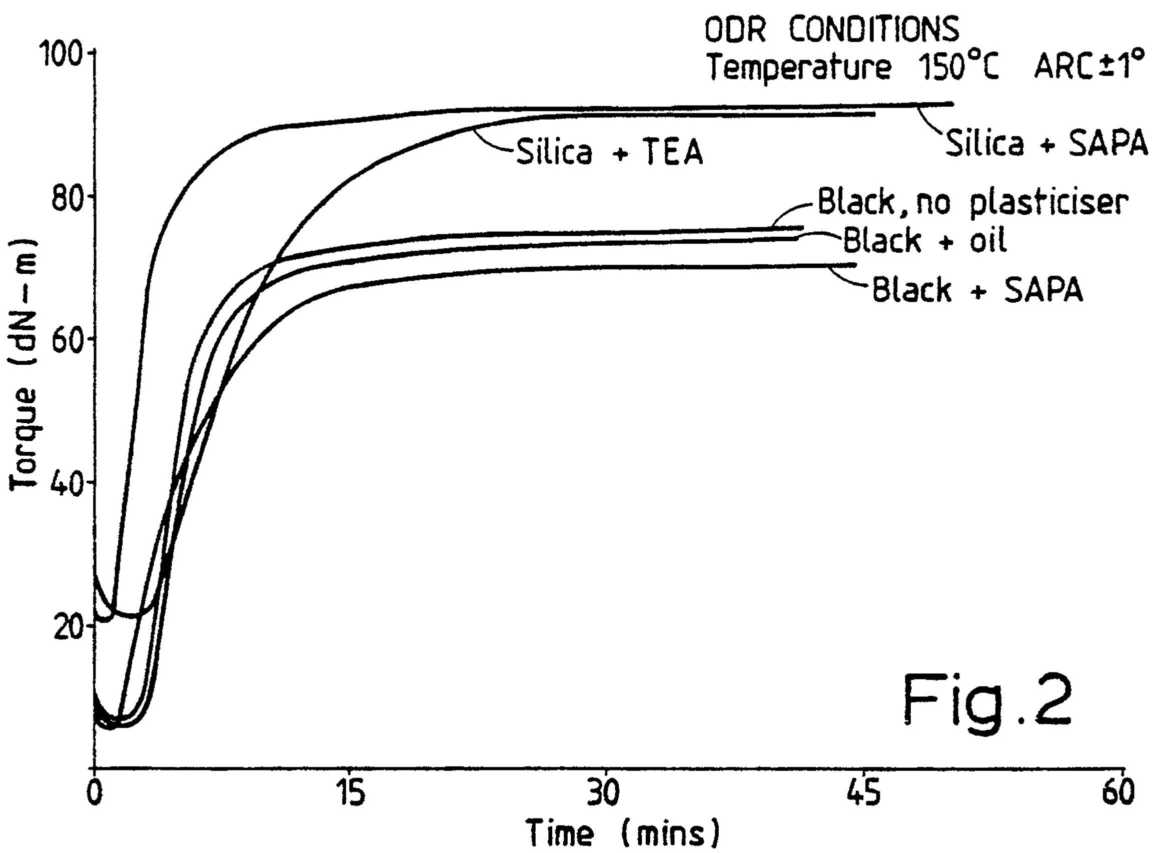
ODR CONDITIONS
Temperature 150°C ARC±1°
Silica + TEA
Silica + SAPA
Black, no plasticiser
Black + oil
Black + SAPA
Torque (dN-m)
Time (mins)
100
80
60
40
20
0
15
30
45
60

Fig.2

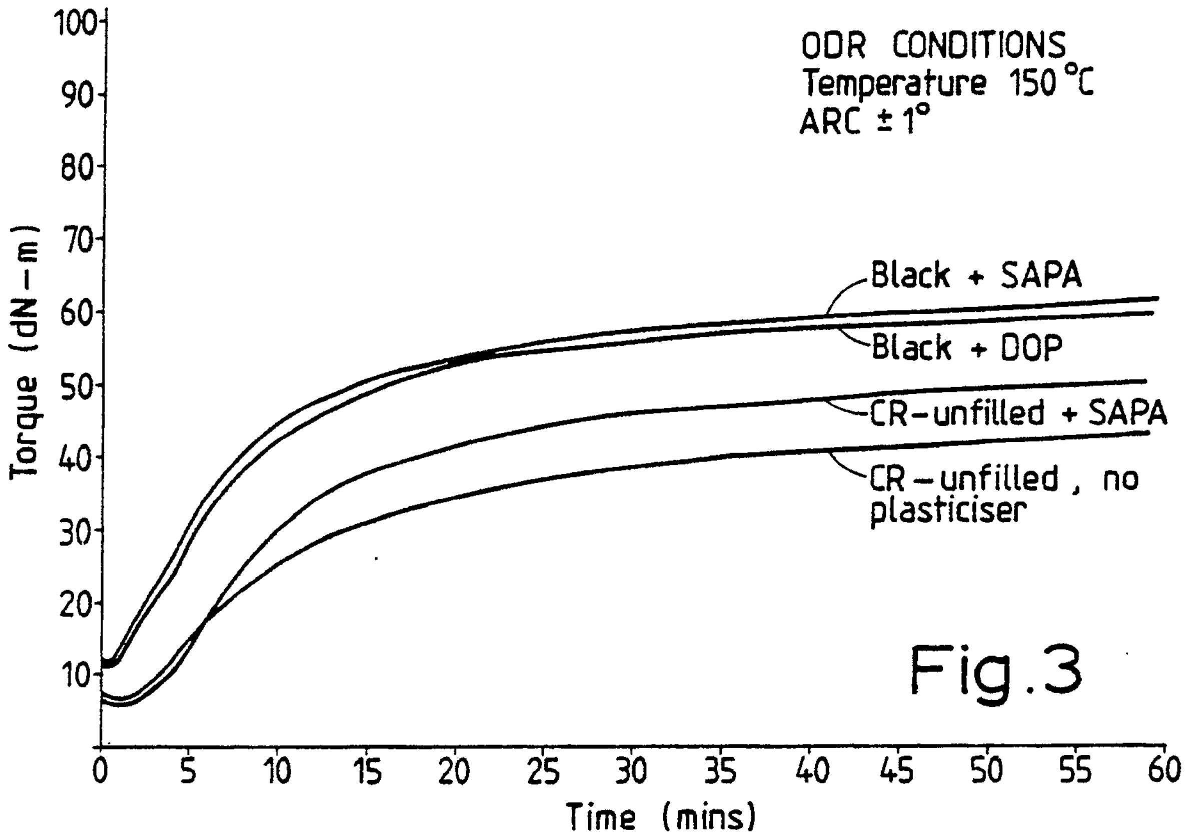
ODR CONDITIONS
Temperature 150 °C
ARC ± 1°
Black + SAPA
Black + DOP
CR-unfilled + SAPA
CR-unfilled, no plasticiser
Torque (dN-m)
Time (mins)
100
90
80
70
60
50
40
30
20
10
0
5
10
15
20
25
30
35
40
45
50
55
60

Fig.3

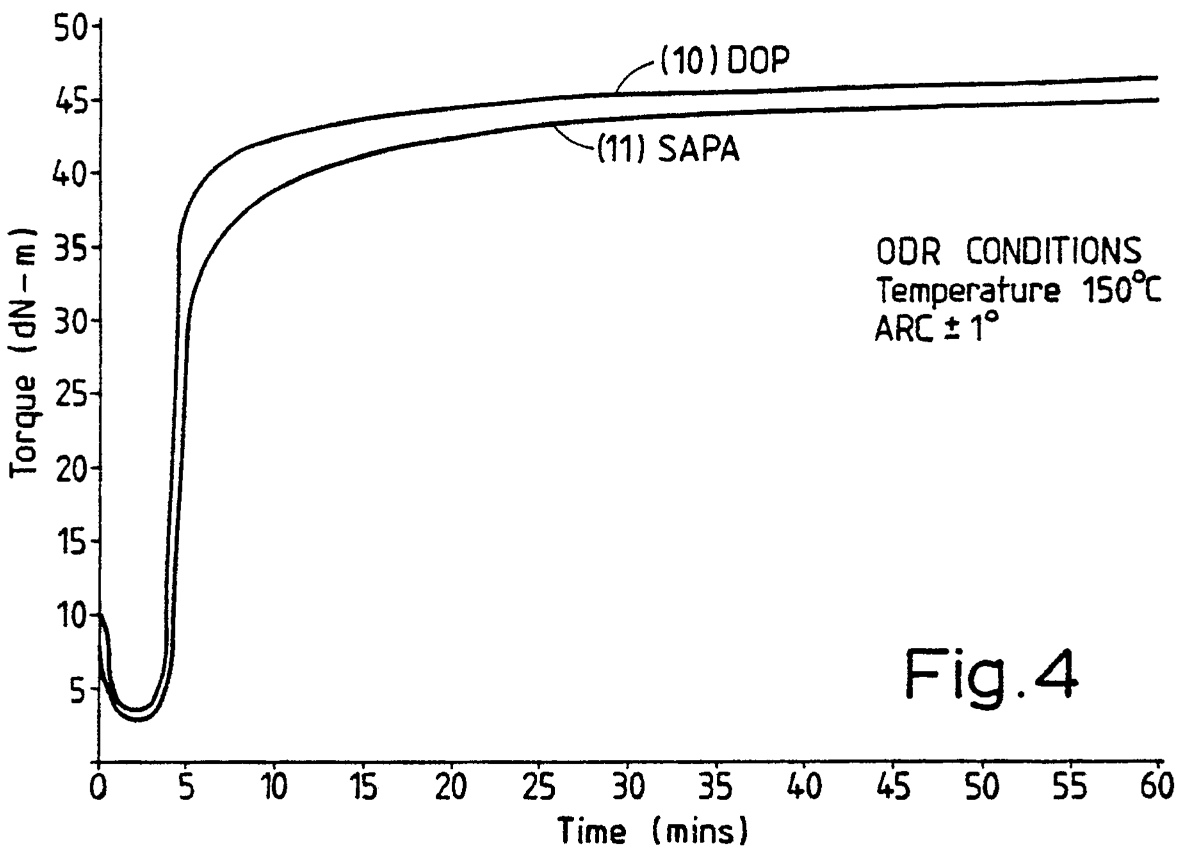
(10) DOP
(11) SAPA
ODR CONDITIONS
Temperature 150°C
ARC ± 1°
Torque (dN-m)
Time (mins)
50
45
40
35
30
25
20
15
10
5
0
5
10
15
20
25
30
35
40
45
50
55
60

Fig.4

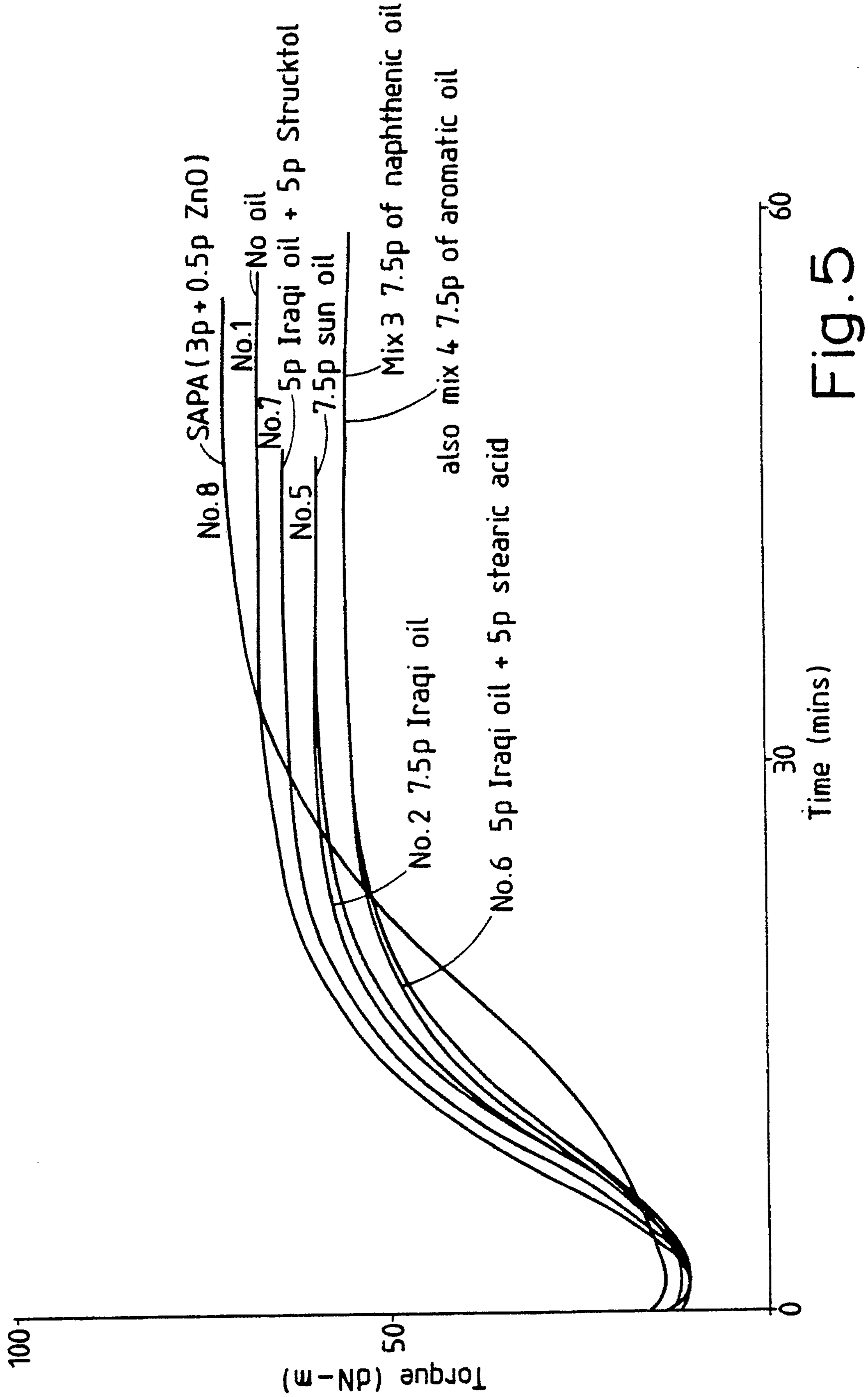

SAPA (3p + 0.5p ZnO)
No.8
No.1
No oil
No.7
5p Iraqi oil + 5p Strucktol
No.5
7.5p sun oil
Mix 3 7.5p of naphthenic oil
also mix 4 7.5p of aromatic oil
No.2 7.5p Iraqi oil
No.6 5p Iraqi oil + 5p stearic acid
Torque (dN-m)
100
50
0
30
60
Time (mins)


Fig.5

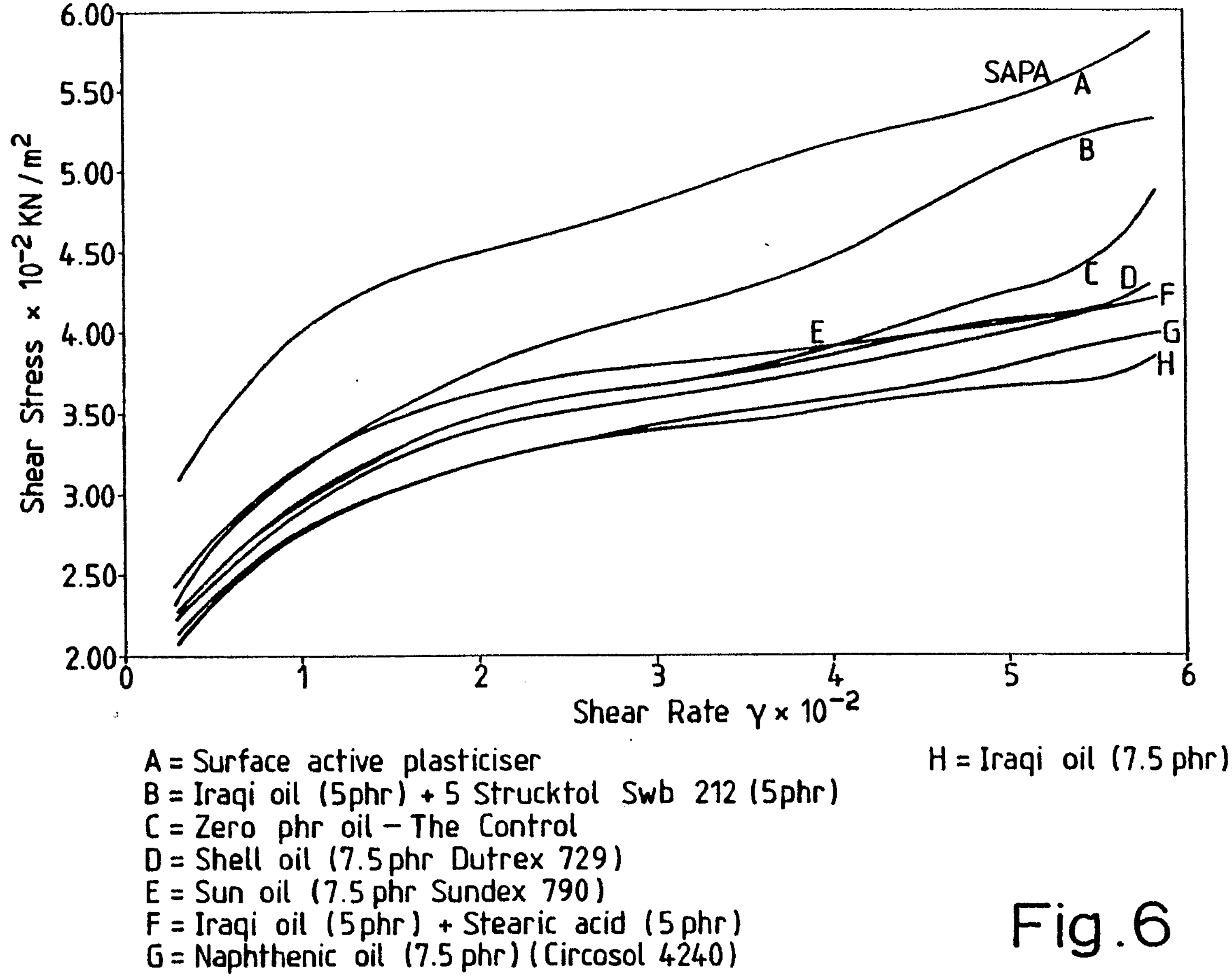
6.00
5.50
5.00
4.50
4.00
3.50
3.00
2.50
2.00
Shear Stress × $10^{-2}$ KN / $m^2$
0
1
2
3
4
5
6
Shear Rate $\gamma \times 10^{-2}$
SAPA
A
B
C
D
E
F
G
H
A = Surface active plasticiser
B = Iraqi oil (5phr) + 5 Strucktol Swb 212 (5phr)
C = Zero phr oil – The Control
D = Shell oil (7.5 phr Dutrex 729)
E = Sun oil (7.5 phr Sundex 790)
F = Iraqi oil (5 phr) + Stearic acid (5 phr)
G = Naphthenic oil (7.5 phr) (Circosol 4240)
H = Iraqi oil (7.5 phr)

Fig.6

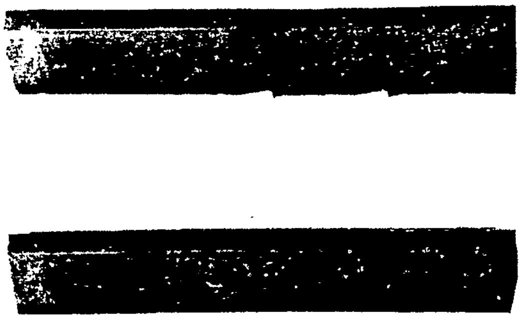

No SAPA

2phr SAPA

Fig.7a

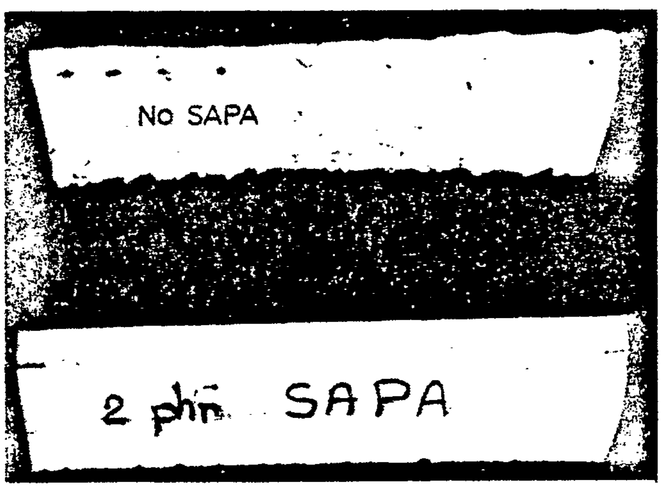


Fig.7b

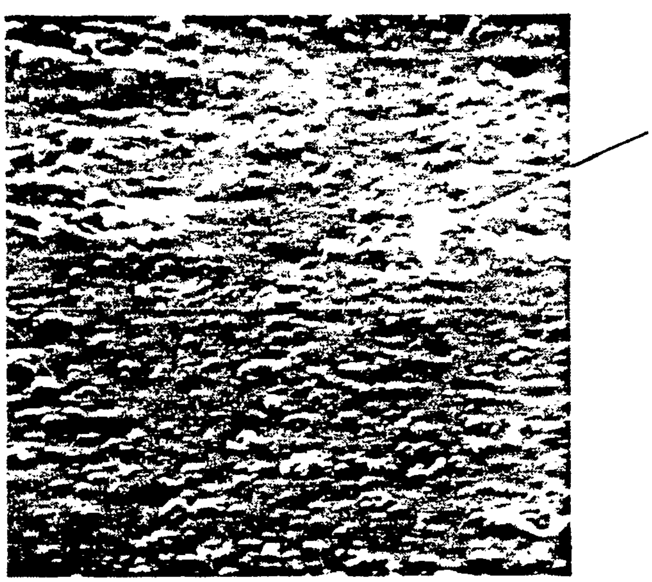

Undispersed large aggregate

Fig.8a

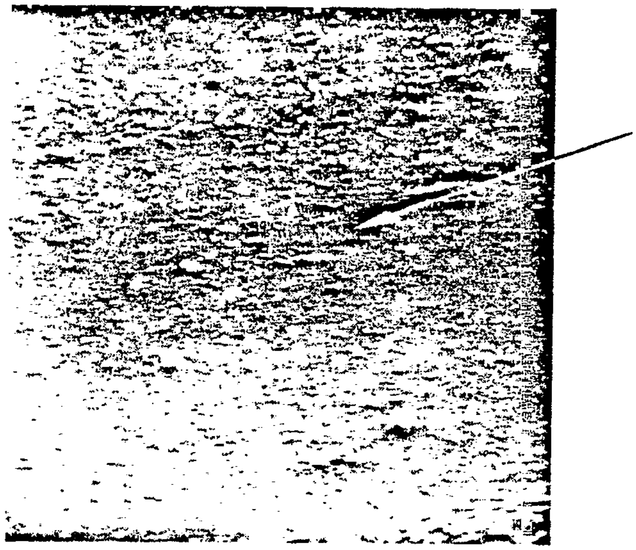

Undispersed small aggregate

Fig. 8b

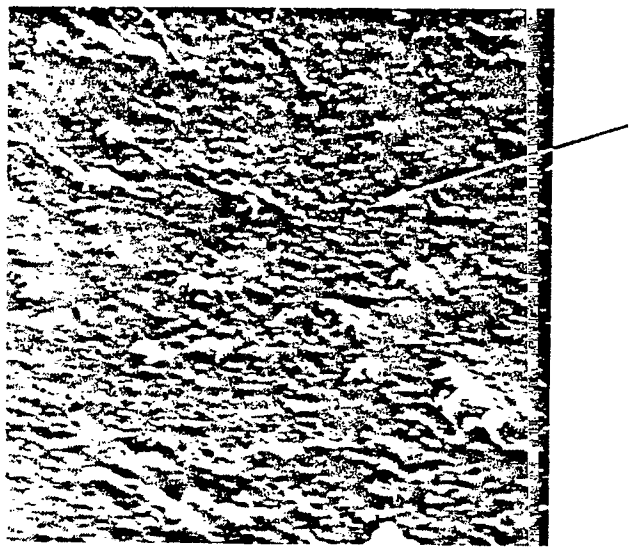

Undispersed large aggregate

Fig. 9a

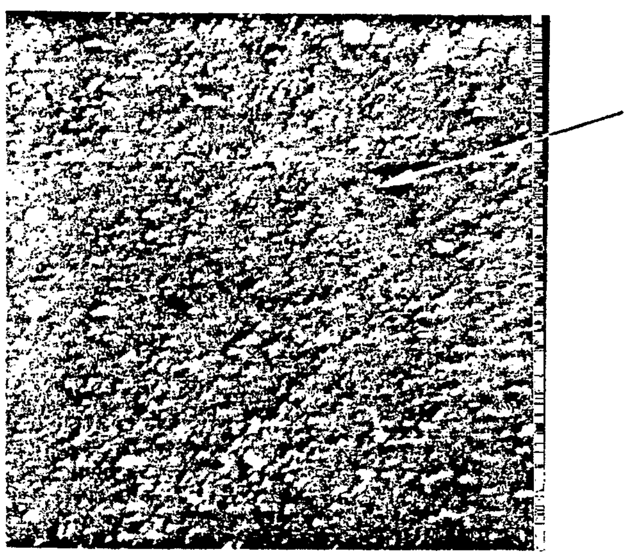

Undispersed small aggregate

Fig. 9b